(19) Europäisches Patentamt
European Patent Office
Office européen des brevets

(11) **EP 4 648 448 A1**

(12) **EUROPEAN PATENT APPLICATION**
published in accordance with Art. 153(4) EPC

(43) Date of publication:
**12.11.2025 Bulletin 2025/46**

(21) Application number: **23917341.2**

(22) Date of filing: **29.12.2023**

(51) International Patent Classification (IPC):
**H04W 4/60** (2018.01)

(52) Cooperative Patent Classification (CPC):
**H04W 4/50; H04W 4/60**

(86) International application number:
**PCT/CN2023/143494**

(87) International publication number:
**WO 2024/152877 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.01.2023 CN 202310090941**

(71) Applicant: **Huawei Technologies Co., Ltd.
Shenzhen, Guangdong 518129 (CN)**

(72) Inventors:
• **LU, Gensen
  Shenzhen, Guangdong 518129 (CN)**
• **FENG, Zhao
  Shenzhen, Guangdong 518129 (CN)**
• **XIN, Yang
  Shenzhen, Guangdong 518129 (CN)**
• **WANG, Yuan
  Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND APPARATUS**

(57) A data processing method and an apparatus are provided. In the data processing method, a first device obtains a first inference value of each of $M_1$ second devices in M second devices related to a first service, and receives a second inference value from each of $M_2$ second devices in the M second devices; and the first device may determine a comprehensive inference value of the first service based on the first inference value of each of the $M_1$ second devices and the second inference value of each of the $M_2$ second devices. The first inference value is generated on the first device or the second device corresponding to the first inference value by using first data and a first model, and the first model is determined by the first device; and the second inference value is generated on the second device corresponding to the second inference value by using second data and a second model. According to the method, privacy and security of the second data in the second device can be ensured, and the comprehensive inference value of the first service can be effectively determined.

Second device → First device

S101: $M_1$ second devices in M second devices send first data or a first inference value to the first device

S102: Each of $M_2$ second devices in the M second devices sends a second inference value to the first device

S103: The first device determines a comprehensive inference value of a first service based on the first inference value of each of the $M_1$ second devices and the second inference value of each of the $M_2$ second devices

FIG. 7

## Description

This application claims priority to Chinese Patent Application No. 202310090941.8, filed with the China National Intellectual Property Administration on January 18, 2023, and entitled "DATA PROCESSING METHOD AND APPARATUS", which is incorporated herein by reference in its entirety.

## TECHNICAL FIELD

This application relates to the field of communication technologies, and in particular, to a data processing method and an apparatus.

## BACKGROUND

A network data analytics function (network data analytics function, NWDAF) network element exists in a 5G network. The NWDAF network element may collect, from the network, data related to a service, analyze the collected data to obtain a mean service score (mean of score, MOS), and then invoke a policy control function (policy control function, PCF) network element to adjust a quality of service (quality of service, QoS) parameter based on the MOS to ensure QoS for the service. The service-related data in the network comes from one or more devices. For example, the service-related data in the network may include service-related data in an application function (application function, AF) network element, service-related data in a base station, and service-related data in a core network (core network, CN) device.

However, the service-related data in the network may include not only data that a device can report to the NWDAF network element, but also private data that the device is not allowed to report to the NWDAF network element. The collection of the private data of the device by the NWDAF network element may cause privacy and security problems to the device. Therefore, when the service-related data in the network includes two parts: reportable data and non-reportable data, how to effectively determine the MOS of the service while ensuring privacy and security of the private data is an urgent problem to be resolved.

## SUMMARY

Embodiments of this application provide a data processing method and an apparatus to effectively determine a MOS of a service while ensuring privacy and security of private data.

According to a first aspect, this application provides a data processing method. The method may be applied to a first device, or may be applied to a chip in a first device, or may be applied to a logical module or software that can implement all or some functions of a first device. The following uses the first device as an example for description. The method includes: The first device obtains a first inference value of each of $M_1$ second devices in M second devices related to a first service, and receives a second inference value from each of $M_2$ second devices in the M second devices; and the first device determines a comprehensive inference value of the first service based on the first inference value of each of the $M_1$ second devices and the second inference value of each of the $M_2$ second devices, where M is a positive integer, and both $M_1$ and $M_2$ are positive integers less than or equal to M.

The first inference value is generated on the first device or the second device corresponding to the first inference value by using first data and a first model, the second device corresponding to each of the first inference value, the first data, and the first model is a same second device in the $M_1$ second devices, and the first model is determined by the first device. The second inference value is generated on the second device corresponding to the second inference value by using second data and a second model, and the second device corresponding to each of the second inference value, the second data, and the second model is a same second device in the $M_2$ second devices.

It can be learned that an operation of generating the second inference value by using the second data and the second model may be performed by the corresponding second device, and that the second data may be private data that the second device is not allowed to send to the first device. In this way, each of the $M_2$ second devices may not send corresponding second data to the first device, thereby ensuring security of the second data of each of the $M_2$ second devices. In addition, the first model of each of the $M_1$ second devices may be determined by the first device, the second model of each of the $M_2$ second devices may be determined by the second device, and an operation of determining the first model and an operation of determining the second model may be performed simultaneously, which is more efficient, thereby helping effectively determine the comprehensive inference value of the first service. Further, when the data processing method is applied to a scenario in which an inference value is a MOS, a MOS of a service can be effectively determined while ensuring privacy and security of private data. In addition, compared with a manner in which the first model of each of the $M_1$ second devices is determined by the second device, an operation of determining the first model by the first device may further reduce computational overheads of each of the $M_1$ second devices.

In an optional implementation, the first inference value is in a one-to-one correspondence with the second device

in the $M_1$ second devices; the first data is in a one-to-one correspondence with the second device in the $M_1$ second devices; the first model is in a one-to-one correspondence with the second device in the $M_1$ second devices; the second inference value is in a one-to-one correspondence with the second device in the $M_2$ second devices; the second data is in a one-to-one correspondence with the second device in the $M_2$ second devices; and the second model is in a one-to-one correspondence with the second device in the $M_2$ second devices.

In an optional implementation, the method further includes: The first device receives first data from each of the $M_1$ second devices. In this implementation, the first inference value of each of the $M_1$ second devices is generated on the first device by using the first data and the first model. In this case, each of the $M_1$ second devices may not calculate the corresponding first inference value. This helps reduce computational overheads of each of the $M_1$ second devices, so that a computing power requirement for each of the $M_1$ second devices can be reduced. When applied to a scenario in which computing resources or computing power of the $M_1$ second devices is limited, this implementation helps reduce impact on performance of the second device caused by use of a relatively large quantity of computing resources by each of the $M_1$ second devices to calculate the first inference value.

In an optional implementation, the method further includes: The first device sends a corresponding first model to each of the $M_1$ second devices; and that the first device obtains the first inference value of each of the $M_1$ second devices in the M second devices related to the first service includes: receiving the first inference value from each of the $M_1$ second devices. In this implementation, the first inference value of each of the $M_1$ second devices is generated on the second device by using the first data and the first model. In this case, the first device may not calculate the first inference value of each of the $M_1$ second devices, thereby reducing computational overheads of the first device. In addition, when applied to a scenario in which computing resources or computing power of the first device is limited, this implementation can reduce impact on performance of the first device caused by use of a relatively large quantity of computing resources by the first device to calculate the first inference value.

In an optional implementation, the method further includes: The first device receives first data from each of $M_3$ second devices in the $M_1$ second devices, where $M_3$ is a positive integer less than $M_1$; and the first device sends, to each of $M_4$ second devices in the $M_1$ second devices, a first model corresponding to the second device, and receives a first inference value from each of the $M_4$ second devices, where the $M_4$ second devices are $M_1$-$M_3$ second devices other than the $M_3$ second devices in the $M_1$ second devices. In this implementation, a first inference value of each of the $M_3$ second devices is generated on the first device by using the first data and the first model. This helps reduce computational overheads of each of the $M_3$ second devices, so that a computing power requirement for each of the $M_3$ second devices can be reduced. The first inference value of each of the $M_4$ second devices is generated on the second device by using the first data and the first model. This helps reduce computational overheads of the first device. In addition, the $M_3$ second devices and the $M_4$ second devices may be determined based on sizes of computing resources of the first device and sizes of computing resources of each of the $M_1$ second devices. This helps better balance and schedule computing resources of the first device and each of the M1 second devices.

In an optional implementation, the method further includes: The first device receives a parameter type of the first data from each of the $M_1$ second devices; and the first device determines, based on the parameter type of the first data of each of the $M_1$ second devices, the first model corresponding to each of the $M_1$ second devices. In this implementation, the first model corresponding to each of the $M_1$ second devices may not be determined by the second device, so that computational overheads of each of the $M_1$ second devices are reduced. In addition, the operation of determining the first model and the operation of determining the second model may be performed by different devices and may be performed simultaneously, featuring higher efficiency.

In an optional implementation, the method further includes: The first device receives a parameter type of the first data from each of the $M_1$ second devices; the first device sends the parameter type of the first data of each of the $M_1$ second devices to a third device; and the first device receives, from the third device, the first model corresponding to each of the $M_1$ second devices. In this implementation, the first model corresponding to each of the $M_1$ second devices is determined by the third device based on the parameter type of the first data. Compared with a manner in which the first model corresponding to each of the $M_1$ second devices is determined by the second device, computational overheads of each of the $M_1$ second devices are reduced. Compared with a manner in which the first device determines the first model based on the parameter type of the first data of each of the $M_1$ second devices, computational overheads of the first device are reduced. In addition, the determining of the first model and the determining of the second model may be performed by different devices and may be performed simultaneously, featuring higher efficiency.

According to a second aspect, this application provides a data processing method. The method may be applied to a second device, or may be applied to a chip in a second device, or may be applied to a logical module or software that can implement all or some functions of a second device. The following uses the second device as an example for description. The method includes: The second device sends first data to a first device; or the second device receives a first model from a first device, and sends a first inference value to the first device, where the first data is data that is related to a first service and that can be sent to the first device, and the first inference value is generated on the second device by using the first data and the first model; and the second device sends a second inference value to the first device, where the second inference value is generated on the second device by using second data and a second model, and the second data is data that is related to the first service and that is not allowed to be sent to the first device.

It can be learned that the second device may not send, to the first device, the second data that is not allowed to be sent to the first device, thereby ensuring security of the second data. In addition, the first model may be determined by the first device, the second model may be determined by the second device, and an operation of determining the first model and an operation of determining the second model may be performed simultaneously, which is more efficient, thereby helping effectively determine a comprehensive inference value of the first service. Further, when the data processing method is applied to a scenario in which an inference value is a MOS, a MOS of a service can be effectively determined while ensuring privacy and security of private data. Compared with a manner in which the first model of the second device is determined by the second device, an operation of determining the first model by the first device may further reduce computational overheads of the second device.

In addition, when the second device sends the first data to the first device, the first inference value is generated on the first device, and the second device may not generate the first inference value, thereby reducing computational overheads of the second device. Therefore, when computing resources or computing power of the second device is limited, impact on performance of the second device caused by use of a relatively large quantity of computing resources by the second device to calculate the first inference value can be reduced. When the second device sends the first inference value to the first device, the first inference value is generated on the second device, so that the first device may not generate the first inference value, and that computational overheads of the first device are reduced. Therefore, when computing resources or computing power of the first device is limited, impact on performance of the first device caused by use of a relatively large quantity of computing resources by the first device to calculate the first inference value can be reduced.

In an optional implementation, the method further includes: The second device sends a parameter type of the first data to the first device, where the parameter type of the first data is used by the first device to determine the first model.

According to a third aspect, this application provides a data processing method. The method is described from a perspective of interaction between a first device and a second device. The method includes: $M_1$ second devices in M second devices related to a first service send first data or a first inference value to the first device; each of $M_2$ second devices in the M second devices sends a second inference value to the first device, where M is a positive integer, and both $M_1$ and $M_2$ are positive integers less than or equal to M; and the first device determines a comprehensive inference value of the first service based on a first inference value of each of the $M_1$ second devices and the second inference value of each of the $M_2$ second devices.

The first inference value is generated on the first device or the second device corresponding to the first inference value by using the first data and a first model, the second device corresponding to each of the first inference value, the first data, and the first model is a same second device in the $M_1$ second devices, and the first model is determined by the first device; and the second inference value is generated on the second device corresponding to the second inference value by using second data and a second model, and the second device corresponding to each of the second inference value, the second data, and the second model is a same second device in the $M_2$ second devices.

It can be learned that each of the $M_2$ second devices may not send corresponding second data to the first device, thereby ensuring security of the second data of each of the $M_2$ second devices. The second data may be private data that the second device is not allowed to send to the first device. In addition, the first model of each of the $M_1$ second devices may be determined by the first device, the second model of each of the $M_2$ second devices may be determined by the second device, and an operation of determining the first model and an operation of determining the second model may be performed simultaneously, which is more efficient, thereby helping effectively determine the comprehensive inference value of the first service. Further, when the data processing method is applied to a scenario in which an inference value is a MOS, a MOS of a service can be effectively determined while ensuring privacy and security of private data. In addition, compared with a manner in which the first model of each of the $M_1$ second devices is determined by the second device, an operation of determining the first model by the first device may further reduce computational overheads of each of the $M_1$ second devices.

In an optional implementation, the first inference value is in a one-to-one correspondence with the second device in the $M_1$ second devices; the first data is in a one-to-one correspondence with the second device in the $M_1$ second devices; the first model is in a one-to-one correspondence with the second device in the $M_1$ second devices; the second inference value is in a one-to-one correspondence with the second device in the $M_2$ second devices; the second data is in a one-to-one correspondence with the second device in the $M_2$ second devices; and the second model is in a one-to-one correspondence with the second device in the $M_2$ second devices.

In an optional implementation, that the $M_1$ second devices in the M second devices related to the first service send the first data or the first inference value to the first device includes: Each of the $M_1$ second devices sends the first data to the first device. In this manner, the first inference value of each of the $M_1$ second devices is generated on the first device by using the first data and the first model. In this case, each of the $M_1$ second devices may not calculate the corresponding first inference value. This helps reduce computational overheads of each of the $M_1$ second devices, so that a computing power requirement for each of the $M_1$ second devices can be reduced.

Alternatively, that the $M_1$ second devices in the M second devices related to the first service send the first data or the first inference value to the first device includes: Each of the $M_1$ second devices sends the first inference value to the first device. In this manner, the first inference value of each of the $M_1$ second devices is generated on the second device by using the first data and the first model. In this case, the first device may not calculate the first inference value of each of the $M_1$ second devices, thereby reducing computational overheads of the first device.

Alternatively, that the $M_1$ second devices in the M second devices related to the first service send the first data or the first inference value to the first device includes: Each of $M_3$ second devices in the $M_1$ second devices sends the first data to the first device, and each of $M_4$ second devices in the $M_1$ second devices sends the first inference value to the first device, where $M_3$ is a positive integer less than $M_1$, and the $M_4$ second devices are $M_1$-$M_3$ second devices other than the $M_3$ second devices in the $M_1$ second devices. In this manner, the first inference value of each of the $M_3$ second devices is generated on the first device by using the first data and the first model. This helps reduce computational overheads of each of the $M_3$ second devices, so that a computing power requirement for each of the $M_3$ second devices can be reduced. The first inference value of each of the $M_4$ second devices is generated on the second device by using the first data and the first model. This helps reduce computational overheads of the first device. In addition, the $M_3$ second devices and the $M_4$ second devices may be determined based on sizes of computing resources of the first device and sizes of computing resources of each of the $M_1$ second devices, so that computing resources of the first device and each of the $M_1$ second devices are better balanced and scheduled.

In an optional implementation, before each of the $M_1$ second devices sends the first inference value to the first device, the method further includes: The first device sends a corresponding first model to each of the $M_1$ second devices. This implementation helps each of the $M_1$ second devices generate the first inference value by using the first data and the received first model, thereby reducing computational overheads of the first device.

In an optional implementation, before each of the $M_4$ second devices in the $M_1$ second devices sends the first data to the first device, the method further includes: The first device sends a corresponding first model to each of the $M_4$ second devices. This implementation helps each of the $M_4$ second devices generate the first inference value by using the first data and the received first model, thereby reducing computational overheads of the first device.

In an optional implementation, the method further includes: Each of the $M_1$ second devices sends a parameter type of the first data to the first device; and the first device determines, based on the parameter type of the first data of each of the $M_1$ second devices, the first model corresponding to each of the $M_1$ second devices.

In an optional implementation, the method further includes: Each of the $M_1$ second devices sends a parameter type of the first data to the first device; the first device sends the parameter type of the first data of each of the $M_1$ second devices to a third device; the third device determines, based on the parameter type of the first data of each of the $M_1$ second devices, the first model corresponding to each of the $M_1$ second devices; and the third device sends, to the first device, the first model corresponding to each of the $M_1$ second devices.

According to a fourth aspect, this application further provides a communication apparatus. The communication apparatus may be a first device or a second device, or may be a chip in a first device or a second device, or may be a logical module or software that can implement all or some functions of a first device or a second device. The communication apparatus has a function of implementing some or all of the implementations of the first aspect, or has a function of implementing some or all of the function implementations of the second aspect. The functions may be implemented by hardware, or may be implemented by hardware by executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit. The storage unit stores program instructions and data that are necessary for the communication apparatus.

In an implementation, the communication apparatus includes a processing unit and a communication unit. The processing unit is configured to control the communication unit to receive and send data/signaling.

The processing unit is configured to obtain a first inference value of each of $M_1$ second devices in M second devices related to a first service.

The communication unit is configured to receive a second inference value from each of $M_2$ second devices in the M second devices, where M is a positive integer, and both $M_1$ and $M_2$ are positive integers less than or equal to M.

The first inference value is generated on the communication apparatus or the second device corresponding to the first inference value by using first data and a first model, the second device corresponding to each of the first inference value, the first data, and the first model is a same second device in the $M_1$ second devices, and the first model is determined by the communication apparatus. The second inference value is generated on the second device corresponding to the second inference value by using second data and a second model, and the second device corresponding to each of the second inference value, the second data, and the second model is a same second device in the $M_2$ second devices.

The processing unit is further configured to determine a comprehensive inference value of the first service based on the first inference value of each of the $M_1$ second devices and the second inference value of each of the $M_2$ second devices.

In addition, for other optional implementations of the communication apparatus in this aspect, refer to related content of the first aspect. Details are not described herein again.

In another implementation, the communication apparatus includes a communication unit.

The communication unit is configured to send first data to a first device; or configured to receive a first model from a first device, and send a first inference value to the first device, where the first data is data that is related to a first service and that can be sent to the first device, and the first inference value is generated on the communication apparatus by using the first data and the first model.

The communication unit is further configured to send a second inference value to the first device, where the second inference value is generated on the communication apparatus by using second data and a second model, and the second data is data that is related to the first service and that is not allowed to be sent to the first device.

In addition, for other optional implementations of the communication apparatus in this aspect, refer to related content of the second aspect. Details are not described herein again.

For example, the communication unit may be a transceiver or a communication interface, the storage unit may be a memory, and the processing unit may be a processor. The processor is coupled to the memory. The memory is configured to store a program or an instruction processor. The processor may be configured to enable, when the program or instructions are executed by the processor, the communication apparatus to perform the method according to the first aspect or the second aspect. The transceiver or the communication interface may be configured to receive and send signals and/or data.

In an implementation, the communication apparatus includes a processor and a transceiver.

The processor is configured to obtain a first inference value of each of $M_1$ second devices in M second devices related to a first service.

The transceiver is configured to receive a second inference value from each of $M_2$ second devices in the M second devices, where M is a positive integer, and both $M_1$ and $M_2$ are positive integers less than or equal to M.

The first inference value is generated on the communication apparatus or the second device corresponding to the first inference value by using first data and a first model, the second device corresponding to each of the first inference value, the first data, and the first model is a same second device in the $M_1$ second devices, and the first model is determined by the communication apparatus. The second inference value is generated on the second device corresponding to the second inference value by using second data and a second model, and the second device corresponding to each of the second inference value, the second data, and the second model is a same second device in the $M_2$ second devices.

The processor is further configured to determine a comprehensive inference value of the first service based on the first inference value of each of the $M_1$ second devices and the second inference value of each of the $M_2$ second devices.

In addition, for other optional implementations of the communication apparatus in this aspect, refer to related content of the first aspect. Details are not described herein again.

In another implementation, the communication apparatus includes a transceiver. The transceiver is configured to send first data to a first device; or configured to receive a first model from a first device, and send a first inference value to the first device, where the first data is data that is related to a first service and that can be sent to the first device, and the first inference value is generated on the communication apparatus by using the first data and the first model.

The transceiver is further configured to send a second inference value to the first device, where the second inference value is generated on the communication apparatus by using second data and a second model, and the second data is data that is related to the first service and that is not allowed to be sent to the first device.

In addition, for other optional implementations of the communication apparatus in this aspect, refer to related content of the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least some or all of the components may be disposed on a same chip. For example, the processor may be divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, more components may be integrated on a same chip. For example, the digital baseband processor and a plurality of application processors (for example, but not limited to, a graphics processing unit and a multimedia processor) may be integrated on a same chip. Such a chip may be referred to as a system-on-a-chip (System-on-a-Chip, SoC). Whether the components are separately disposed on different chips or integrated and disposed on one or more chips usually depends on a requirement of a product design. Specific implementations of the foregoing components are not limited in embodiments of this application.

According to a fifth aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal, and then a processed signal arrives at the transceiver (or the communication interface). Similarly, when the processor receives the foregoing input signal, the transceiver (or the communication interface) receives the signal, and inputs the signal into the processor. Further, after the transceiver (or the communication interface) receives the signal, other processing may further need to be performed on the signal, and then a processed signal is input into the processor.

Unless otherwise specified, or if operations such as sending and receiving related to the processor do not contradict an actual function or internal logic of the operations in related descriptions, all the operations may be more generally understood as operations such as outputting, receiving, and inputting by the processor, instead of operations such as sending and receiving directly performed by a radio frequency circuit and an antenna.

In an implementation process, the processor may be a processor specially configured to perform these methods, or may be a processor that executes computer instructions in a memory to perform these methods, for example, a general-purpose processor. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to a sixth aspect, this application further provides a communication system. The system includes the first device and the M second devices in the foregoing aspects. In another possible design, the system may further include another device that interacts with the first device and/or one or more of the M second devices in the solutions provided in this application.

According to a seventh aspect, this application provides a computer-readable storage medium. The computer-readable storage medium stores a computer program. When the computer program is run, the method according to the first aspect or the second aspect is performed.

According to an eighth aspect, this application further provides a computer program product including instructions. The computer program product includes computer program code. When the computer program code is run, the method according to the first aspect or the second aspect is performed.

According to a ninth aspect, this application provides a chip system. The chip system includes a processor and an interface. The interface is configured to obtain a program or instructions. The processor is configured to invoke the program or the instructions to implement a function in the first aspect, or is configured to invoke the program or the instructions to implement a function in the second aspect. In a possible design, the chip system further includes a memory. The memory is configured to store program instructions and data that are necessary for a terminal. The chip system may include a chip, or may include a chip and another discrete component.

## BRIEF DESCRIPTION OF DRAWINGS

FIG. 1 is a diagram of a system architecture according to an embodiment of this application;
FIG. 2 is a diagram of a structure of a communication system according to an embodiment of this application;
FIG. 3 is a diagram of data analytics performed by a network data analytics function (network data analytics function, NWDAF) network element according to an embodiment of this application;
FIG. 4 is a diagram of data analytics performed by another NWDAF network element according to an embodiment of this application;
FIG. 5 is a diagram of data analytics performed by another NWDAF network element according to an embodiment of this application;
FIG. 6 is a diagram of vertical federated learning according to an embodiment of this application;
FIG. 7 is a schematic flowchart of a data processing method according to an embodiment of this application;
FIG. 8A and FIG. 8B are a schematic flowchart of another data processing method according to an embodiment of this application;
FIG. 9A and FIG. 9B are a schematic flowchart of another data processing method according to an embodiment of this application;

FIG. 10 is a diagram of a structure of a communication apparatus according to an embodiment of this application;

FIG. 11 is a diagram of a structure of another communication apparatus according to an embodiment of this application; and

FIG. 12 is a diagram of a structure of a chip according to an embodiment of this application.

## DESCRIPTION OF EMBODIMENTS

The following describes embodiments of this application with reference to the accompanying drawings in embodiments of this application.

To better understand a data processing method disclosed in embodiments of this application, a communication system to which embodiments of this application are applicable is first described.

Technical solutions in embodiments of this application may be applied to various communication systems, for example, a global system for mobile communication, a long term evolution (long term evolution, LTE) system, a universal mobile telecommunications system, a 4th generation (4th generation, 4G) mobile communication technology system, a next-generation radio access network (next-generation radio access network, NG-RAN), a new radio technology (new radio, NR) system, and a 5th generation mobile communication technology (5th generation mobile network, 5G) system. With continuous development of communication technologies, the technical solutions in embodiments of this application may be further applied to a subsequent evolved communication system, such as a 6th generation mobile communication technology (6th generation mobile network, 6G) system or 7th generation mobile communication technology (7th generation mobile network, 7G) system.

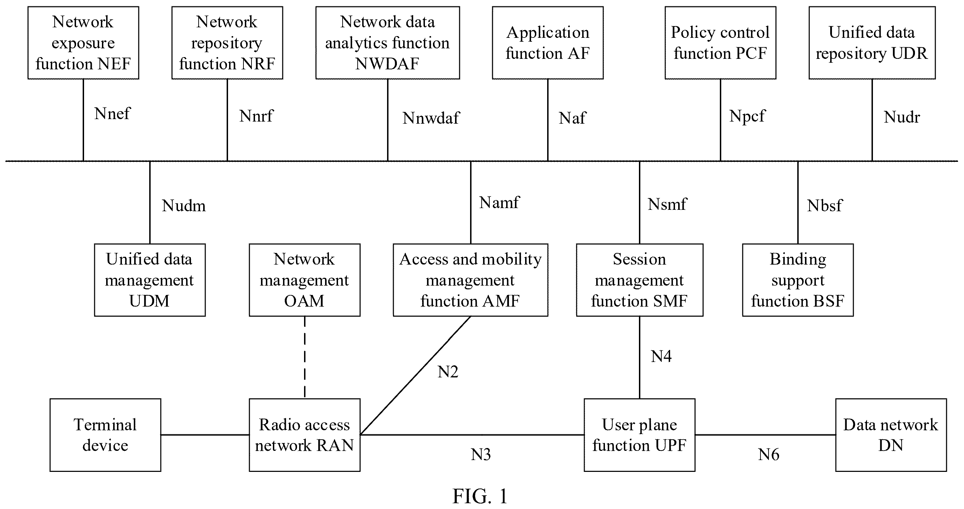

FIG. 1 is a diagram of a system architecture according to an embodiment of this application. The system architecture is a 5G network architecture based on a service-based interface. The system architecture may include a network data analytics function (network data analytics function, NWDAF) network element, an application function (application function, AF) network element, a radio access network (radio access network, RAN) device, a terminal device, an operation, administration, and management (operation, administration, and management, OAM) device, an access and mobility management function (access and mobility management function, AMF) network element, a user plane function (user plane function, UPF) network element, a data network (data network, DN), a unified data management (unified data management, UDM) network element, a binding support function (binding support function, BSF) network element, a network exposure function (network exposure function, NEF) network element, a network repository function (network repository function, NRF) network element, a policy control function (policy control function, PCF) network element, and a unified data repository (unified data repository, UDR) network element.

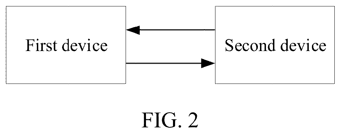

FIG. 2 is a diagram of a structure of a communication system according to an embodiment of this application. The communication system may include but is not limited to one first device and one second device. The first device may be an NWDAF network element. The second device may be an AF network element, a RAN device, a terminal device, a core network (core network, CN) device, or the like. A quantity and forms of devices shown in FIG. 2 are used as an example, and do not constitute a limitation on this embodiment of this application. In actual application, two or more second devices may be included. One first device and one second device are used as an example in the communication system shown in FIG. 2.

In this embodiment of this application, the NWDAF network element has data collection, training, analytics, and inference functions, and may be configured to: collect related data from a network element, a third-party service server, a terminal device, or a network management system in a network, and perform analytics training based on the related data to obtain an analytics result, and provide the analytics result to the network element, the third-party service server, the terminal device, or the network management system in the network. The analytics result may assist the network in selecting a quality of service parameter for a service, or assist the network in performing traffic routing, or assist the network in selecting a background data transmission policy, or the like.

The AF network element may be configured to transfer a requirement of an application side for a network side, for example, a quality of service (quality of service, QoS) requirement or user status event subscription on the application side. The AF network element may be a third-party functional entity or an application server deployed by an operator. The AF network element may directly communicate with the NWDAF network element, or may communicate with the NWDAF network element by using an NEF network element.

The NEF network element may be responsible for externally exposing 5G network capabilities and events, and receiving related external information.

The RAN device is a ground infrastructure, and may be responsible for providing air interface access in a wireless communication service, enabling a high-speed moving device to connect to the network. The RAN device needs to be able to meet user management tasks within a range, including access, roaming, connection to a public switched telephone network and the Internet (Internet), data QoS management, web (Web) connection, and the like. The RAN device includes but is not limited to: an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB, or a home NodeB, HNB), a baseband unit (baseband unit, BBU), an access node (access point, AP) in a wireless fidelity (wireless fidelity, Wi-Fi) system, a radio relay node, a radio backhaul node, a transmission point (transmission and reception point, TRP, or transmission point, TP), or the like, or may be a device used in a 4G, 5G, or even 6G system, for example, an evolved NodeB (NodeB, eNB, or e-NodeB, evolutional NodeB) in LTE, a next-generation LTE base station (next-generation eNodeB, ng-eNB), a next-generation base station (next-generation NodeB, gNodeB, or gNB), a transmission and reception point, or a transmission point (TRP or TP), or may be a network node that forms a gNB or a transmission point, for example, a baseband unit (BBU), or a distributed unit (distributed unit, DU), or a pico network device (Picocell), or a femto network device (Femtocell), or a roadside unit (road side unit, RSU) in an intelligent driving scenario. The base station may be a macro base station, a micro base station, a pico base station, a small cell, a relay station, a balloon-based base station, or the like.

The CN device is a device in a core network that can connect an access network to another access network. The core network usually refers to a network part other than the access network and a customer premises network. In 5G, the core network includes two parts: a user plane and a control plane. In a 5G core network, the CN device may be a network function (network function, NF) network element. For example, in the 5G network, the CN device may be an NF network element such as an AMF network element, a UPF network element, a UDM network element, a BSF network element, an NEF network element, an NRF network element, a PCF network element, or a UDR network element. An NF is a smallest deployment granularity in the 5G network. The NF network element may perform communication in a service-based manner based on an open application programming interface (application programming interface, API). Different NF network elements can implement different functions and provide different services. In addition, the NF network element may expose related network information to another NF network element in an event exposure (event exposure) manner. An exposed event type (for example, PDU session release, or moving of a terminal device out of an area of interest) may be identified by using an event (Event) identity (identity document, ID).

The terminal device may also be referred to as user equipment (user equipment, UE), a terminal, an access terminal, a subscriber unit, a subscriber station, a mobile station, a mobile, a remote station, a remote terminal, a mobile device, a user terminal, a user agent, or a user apparatus, and may be applied to a 4G system, a 5G system, a 6G system, or the like. The terminal device in embodiments of this application may be a joint device that transmits and receives digital signals over an ordinary telephone line, or may be a cellular phone, a cordless phone, a session initiation protocol (session initiation protocol, SIP) phone, a wireless local loop (wireless local loop, WLL) station, a personal digital assistant (personal digital assistant, PDA), a mobile phone (mobile phone), a tablet computer (Pad), a computer with a wireless transceiver function, a head mounted display (head mounted display, HMD), a VR terminal device (such as VR glasses), an augmented reality (augmented reality, AR) terminal device (such as AR glasses), a mixed reality (mixed reality, MR) terminal device, a wireless terminal in industrial control (industrial control), a processing device connected to a wireless modem, a tactile terminal device, a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), an RSU of the foregoing wireless terminal type, a wearable terminal device, a terminal device in a future 5G network, a terminal device in a future evolved public land mobile network (public land mobile network, PLMN), or the like.

For ease of understanding embodiments disclosed in this application, the following two points are described.

(1) In embodiments disclosed in this application, an NR network scenario in a wireless communication network is used as an example of scenarios for description. It should be noted that the solutions in embodiments disclosed in this application may also be applied to another wireless communication network, and a corresponding name may also be replaced with a name of a corresponding function in the another wireless communication network.

(2) Aspects, embodiments, or features of this application are presented in embodiments disclosed in this application by describing a system that includes a plurality of devices, components, modules, and the like. It should be appreciated and understood that, each system may include other devices, components, modules, and the like, and/or may not include all devices, components, modules, and the like discussed with reference to the accompanying drawings. In addition, a combination of these solutions may be used.

Related concepts in embodiments of this application are then briefly described.

1. Data analytics of an NWDAF network element

The NWDAF network element may perform data analytics after the NWDAF network element receives a subscription/request from a consumer (consumer). The consumer may be, for example, an NF network element or an OAM device. Specifically, after receiving the subscription/request from the consumer, the NWDAF network element may collect related data from the network, process and analyze the data to obtain a statistical or predicted analytics result, and then feed back the analytics result to the consumer.

The NWDAF network element may support providing a plurality of different types of analytics results, and the different types of analytics results may be identified by using different analytics IDs (Analytics IDs). For example, a service experience data analytics result may be identified by using an analytics ID denoted as "service experience (Service Experience)", a network performance analytics result may be identified by using an analytics ID denoted as "network performance (Network Performance)", and a QoS sustainability analytics result may be identified by using an analytics ID denoted as "quality of service sustainability analytics (QoS sustainability analytics)". The following uses the analytics ID denoted as "service experience" as an example to describe the data analytics of the NWDAF network element.

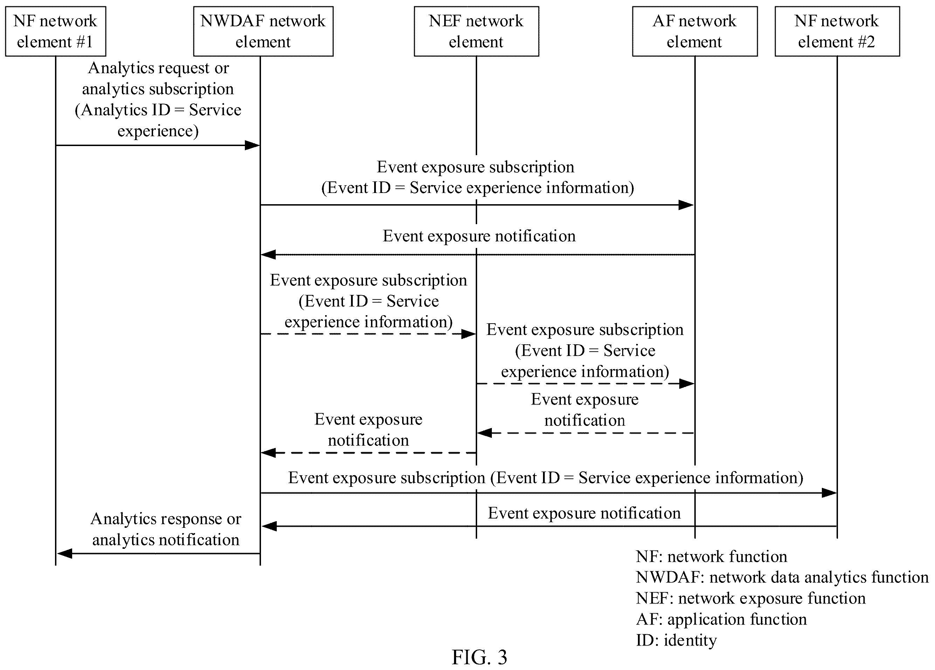

With reference to FIG. 3, an NF network element #1 used as a consumer may send an analytics request (Nnwdaf_AnalyticsInfo_Request) or an analytics subscription (Nnwdaf_AnalyticsSubscription_Subscribe) to the NWDAF network element. Nnwdaf_AnalyticsInfo_Request or Nnwdaf_AnalyticsSubscription_Subscribe may carry data shown in Table 1.

Table 1

| Data type | Data content or object |
|---|---|
| Analytics ID | Service experience |
| Target of analytics reporting (Target of Analytics Reporting) | Any terminal device |
| Analytics filter information (Analytics Filter Information) (including one or more items) | Application ID (Application ID), single network slice selection assistance information (single network slice selection assistance information, S-NSSAI), data network name (data network name, DNN), application server (application server, AS) address (Address/Addresses), area of interest (area of interest, AoI), radio access technology (radio access technology, RAT) type (type/types), and frequency (Frequency) value (value/values) |
| Analytics reporting information (Analytics Reporting Information) | Analytics target period (Analytics target period) |

Then the NWDAF network element may subscribe to service data of the AF network element. Specifically, in a manner, the NWDAF network element may directly send an event exposure subscription (Naf_EventExposure_Subscribe) to the AF network element, and the AF network element may feed back an event exposure notification (Naf_EventExposure_Notify) to the NWDAF network element. In another manner, a procedure shown by a dashed line in FIG. 3 indicates that the NWDAF network element may send an event exposure subscription (Nnef_EventExposure_Subscribe) to an NEF network element, and then the NEF network element sends the event exposure request to the AF network element. Correspondingly, the AF network element may feed back an event exposure notification (Nnef_EventExposure_Notify) to the NWDAF network element by using the NEF network element. Nnef_EventExposure_Subscribe or Naf_EventExposure_Subscribe may carry an event ID denoted as "service experience information (Service Experience information)", and Nnef_EventExposure_Notify or Naf_EventExposure_Notify may carry service data of the AF network element.

In addition, the NWDAF network element may further subscribe to network data of one or more NF network elements #2. Specifically, the NWDAF network element may send an event exposure subscription (Nnf_EventExposure_Subscribe) to each of the one or more NF network elements #2, and each NF network element #2 may feed back an event exposure notification (Nnf_EventExposure_Notify) to the NWDAF network element. Nnf_EventExposure_Subscribe may carry an event ID denoted as "service experience information", and Nnf_EventExposure_Notify may carry network data of the NF network element #2.

Then the NWDAF network element may analyze the service data of the AF network element and the network data of the NF network element #2 to obtain an analytics result. The NWDAF network element may further send an analytics response (Nnwdaf_AnalyticsInfo_Request Response) or an analytics notification (Nnwdaf_AnalyticsSubscription_Notify) carrying the analytics result to the NF network element #1. The analytics result may indicate whether a QoS parameter used for the NF network element #1 meets a mean service score (mean of score, MOS) requirement, to evaluate service experience and quality of service of the NF network element #1.

2. MOS

The MOS may be used to represent QoS for a service. For example, a MOS of a video service may be used to represent quality of service for the video service and evaluate video viewing experience of a user, and may be used as a service feature of the video service on a multimedia platform. The MOS of the video service may also be referred to as a video (video) MOS. For another example, in a vertical industry, a synchronous timing MOS may reflect a synchronous working status of a production device, and can be used as a service feature in a factory production scenario. For another example, in vehicle to everything (vehicle to everything, V2X), the MOS may reflect a service delay, and effective real-time service monitoring may be implemented based on the MOS.

The MOS may be further used by a PCF network element to adjust a QoS parameter to ensure QoS for a service. For example, an AF network element used as a multimedia platform pays relatively high attention to a video service, and video fluency and definition greatly affect viewing experience of a user. In this case, the PCF network element may adjust a QoS parameter based on a MOS of the video service, to ensure a data transmission rate related to the video service and transmission quality of a packet data unit (packet data unit, PDU) session, thereby ensuring QoS for a multimedia service. For another example, an AF network element used as a vertical industry platform pays relatively high attention to device status monitoring information, and the PCF network element may adjust a QoS parameter in a timely manner based on a MOS of a device working status, to provide precise time synchronization and a low latency requirement for the device, thereby ensuring device production stability and product quality.

3. Service experience model

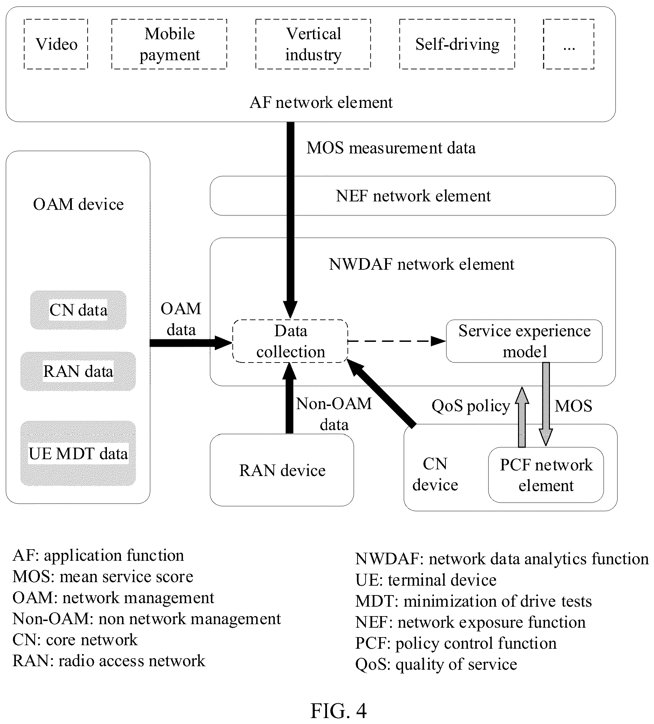

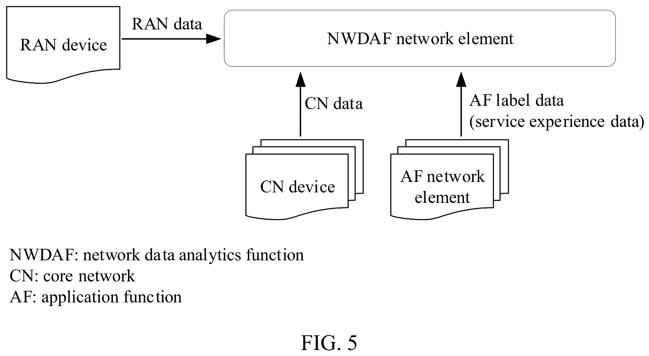

The service experience model may be used to generate a MOS of a service based on data related to service experience. The service experience model may be obtained by the NWDAF network element through training based on data collected from at least one device related to service experience, as shown in FIG. 4. With reference to FIG. 4, the data collected by the NWDAF network element may include: MOS measurement data collected from an AF network element, OAM monitoring data collected from an OAM device, and non-OAM (Non-OAM) monitoring data collected from a RAN device and a CN device. The NWDAF network element collecting the MOS measurement data from the AF network element may be: The NWDAF network element collects the MOS measurement data from the AF network element by using an NEF network element. In addition, the NWDAF network element may send the MOS generated by using the service experience model to a PCF network element. The PCF network element determines whether the received MOS meets a MOS requirement, adjusts a QoS policy when the received MOS does not meet the MOS requirement, and feeds back the adjusted QoS policy to the NWDAF, to improve QoS for the service. In addition, when the at least one device related to service experience includes a RAN device, a CN device, and an AF network element (as shown in FIG. 5), data collected by the NWDAF network element may be shown in Table 2.

Table 2

| Data | Data source |
| --- | --- |
| Service experience | AF network element |
| Application-layer buffer size (Buffer size) | AF network element |
| Internal private data of the AF network element | AF network element |
| QoS flow bit rate (QoS flow Bit Rate) | UPF network element |
| QoS flow packet delay (QoS flow Packet Delay) | UPF network element |
| QoS flow packet error rate (QoS flow Packet Error Rate) | UPF network element |
| Internal private data of the UPF network element | UPF network element |
| Reference signal received power (reference signal received power, RSRP) | RAN device |
| Reference signal received quality (reference signal received quality, RSRQ) | RAN device |
| Signal to interference plus noise ratio (signal to interference plus noise ratio, SINR) | RAN device |
| Internal private data of the RAN device | RAN device |
| UE location (UE Location) | AMF network element |
| Internal private data of the AMF network element | AMF network element |

Specifically, linear regression is used as an example. The service experience model may be shown in formula (1):

$$h(x) = w_0 x_0 + w_1 x_1 + w_2 x_2 + w_3 x_3 + w_4 x_4 + w_5 x_5 \dots + w_D x_D \qquad (1)$$

In the formula, h(x) represents service experience; $x_i$ (i = 0, 1, 2, ..., D) represents data in a device related to service experience, and D is a dimension of the data; and $w_i$ (i = 0, 1, 2, ..., D) is a weight of each piece of data that affects service experience, and D is a dimension of the weight.

4. Vertical federated learning

Vertical federated learning is distributed learning, and may be used for model training and inference when each participant is unwilling to share raw data. Vertical federated learning is applicable to a case in which data features of participants largely overlap but sample IDs overlap only slightly. The following describes vertical federated learning by using an example in which participants include participant A and participant B.

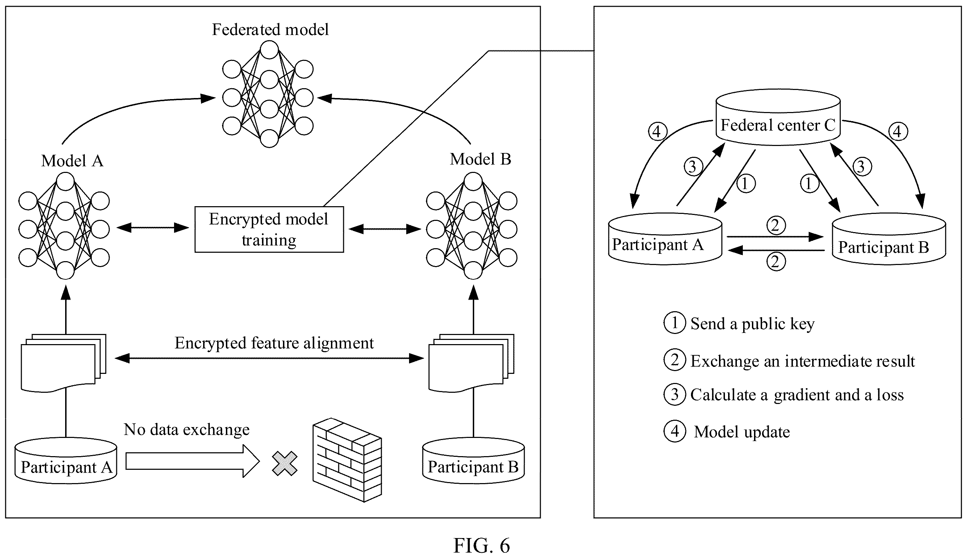

With reference to FIG. 6, it is assumed that participant A has a data set $\{x_i^A\}_i \in D_A$ , and that participant B has a data set $\{x_i^B, y_i\}_i \in D_B$ , where $y_i$ is label data of participant B. A to-be-trained model may be shown in formula (2):

$$h(x_i) = \Theta_A x_i^A + \Theta_B x_i^B \qquad (2)$$

It is assumed that a target function used in linear regression is shown in formula (3):

$$\min_{\Theta_A, \Theta_B} L \qquad (3)$$

In the formula, L is a loss function, and L may be shown in formula (4):

$$L = \sum_i \left\| \Theta_A x_i^A + \Theta_B x_i^B - y_i \right\|^2 + \frac{\lambda}{2} (\|\Theta_A\|^2 + \|\Theta_B\|^2) \qquad (4)$$

Assuming that $\mu_i^A = \Theta_A x_i^A$ , and $\mu_i^B = \Theta_B x_i^B$ , L may be transformed into formula (5):

$$L = \sum_i \left\| \mu_i^A + \mu_i^B - y_i \right\|^2 + \frac{\lambda}{2} (\|\Theta_A\|^2 + \|\Theta_B\|^2) \qquad (5)$$

Assuming that $L_A = \sum_i ((\mu_i^A)^2) + \frac{\lambda}{2} \|\Theta_A\|^2$ , and $L_B = \sum_i ((\mu_i^B - y_i)^2) + \frac{\lambda}{2} \|\Theta_B\|^2$ , and $L_{AB} = 2 \sum_i \mu_i^A (\mu_i^B - y_i)$ , L may be shown in formula (6):

$$L = L_A + L_B + L_{AB} \qquad (6)$$

Assuming that a residual $d_i = \mu_i^A + \mu_i^B - y_i$ , gradients of L with respect to $\Theta_A$ and $\Theta_B$ may be shown in formula (7) and formula (8):

$$\frac{\partial L}{\partial \Theta_A} = \sum_i d_i x_i^A + \lambda \Theta_A \qquad (7)$$

$$\frac{\partial L}{\partial \Theta_B} = \sum_i d_i x_i^B + \lambda \Theta_B \qquad (8)$$

In a model training process, $\Theta_A$ may be updated based on formula (9), and $\Theta_B$ may be updated based on formula (10):

$$\Theta_A := \Theta_A + \alpha \frac{\partial L}{\partial \Theta_A} \qquad (9)$$

$$\Theta_B := \Theta_B + \alpha \frac{\partial L}{\partial \Theta_B} \qquad (10)$$

With reference to FIG. 6, the model training process based on vertical federated learning may include the following steps:

Step 1: Participant A initializes a model parameter $\Theta_A$, and participant B initializes a model parameter $\Theta_B$. Federal center C may create a homomorphic encryption key pair, and send a public key to participant A and participant B. A private key is reserved in federal center C.

Step 2: Participant A calculates $\mu_i^A$ and $L_A$ based on $\Theta_A$, and sends, to participant B, $\mu_i^A$ and $L_A$ encrypted by using the public key.

Step 3: Participant B calculates $\mu_i^B$ based on $\Theta_B$, then calculates $d_i$, $L_{AB}$, and $L_B$ based on $\mu_i^A$, $\mu_i^B$, and $y_i$, obtains $L$ through calculation based on $L_A$, $L_{AB}$, and $L_B$ (an encrypted calculation result of a homomorphic encryption algorithm, after being decrypted, is consistent with a non-encrypted calculation result), and then sends the encrypted $d_i$ to participant A.

Step 4: Participant A calculates $\left[\left[\frac{\partial L}{\partial \Theta_A}\right]\right]$ ([[]] represents homomorphic encryption) based on $d_i$, and sends $\left[\left[\frac{\partial L}{\partial \Theta_A}\right]\right]$ to federal center C; and participant B calculates $\left[\left[\frac{\partial L}{\partial \Theta_B}\right]\right]$ based on $d_i$, and sends $\left[\left[\frac{\partial L}{\partial \Theta_B}\right]\right]$ to federal center C. Federal center C decrypts the gradient values by using the private key, sends the decrypted $\frac{\partial L}{\partial \Theta_A}$ to participant A, and sends the decrypted $\frac{\partial L}{\partial \Theta_B}$ to participant B. Participant A updates $\Theta_A$ based on the received $\frac{\partial L}{\partial \Theta_A}$, and participant B updates $\Theta_B$ based on the received $\frac{\partial L}{\partial \Theta_B}$.

Participant A and participant B may perform the foregoing step 2 to step 4 iteratively for a plurality of times based on the updated $\Theta_A$ and the updated $\Theta_B$, until a model training termination condition is met. For example, the model training termination condition may be that the number of iterations reaches a threshold (for example, the threshold is 10000) or that L is less than a threshold (for example, the threshold is 0.001).

After the model training based on vertical federated learning ends, participant A may calculate $\Theta_A x_j^A$ based on $\Theta_A$ obtained at the end of the model training, and send $\Theta_A x_j^A$ to participant B; and participant B may calculate $\Theta_B x_j^B$ based on $\Theta_B$ obtained at the end of the model training, and calculate $\Theta_A x_j^A + \Theta_B x_j^B$. It can be learned that, in the vertical federated learning manner, participant A may not send a data set to participant B. This helps ensure data privacy and security.

5. Service experience model based on vertical federated learning

Any device may have private data that is not allowed to be sent to another device. If private data in a device is sent to another device, a data security problem may occur. For example, for the service experience model, private data that cannot be reported by the RAN device may include an air interface bit rate, a change rate of the air interface bit rate, a buffer, load, and the like of a base station for each terminal device; private data that cannot be reported by the CN device may include private connection information and the like of the user; private data that cannot be reported by the terminal device may include personal sensitive information of the user, private local information of the device, and the like; and private data that cannot be reported by the AF network element may include private computing resource information and the like.

The service experience model based on vertical federated learning helps the device skip sending private data to the NWDAF network element, so that data security of the device can be ensured. Assuming that the at least one device related to service experience includes the RAN device, the CN device, and the AF network element, the service experience model based on vertical federated learning may be shown in formula (11):

$$h(x_i) = \Theta_A x_i^A + \Theta_B x_i^B + \Theta_C x_i^C + \Theta_D x_i^D \tag{11}$$

In the formula, $x_i$ represents an $i^{th}$ piece of sample data, $x_i^A$ is private data that is in the sample data and that is distributed on the RAN device, $x_i^B$ is private data that is in the sample data and that is distributed on the CN device, $x_i^C$ is private data that is in the sample data and that is distributed on the AF network element, $x_i^D$ is common data that is in the sample data and that is reported by the RAN device, the CN device, or the AF network element to the NWDAF network element (that is, data that can be reported to the NWDAF network element), and $\Theta_A$, $\Theta_B$, $\Theta_C$, and $\Theta_D$ are model parameters corresponding to $x_i^A$, $x_i^B$, $x_i^C$, and $x_i^D$ respectively.

An embodiment of this application provides an example of a service experience model based on vertical federated learning, as shown in formula (12):

$$h(x_i) = \Theta_{A_1} x_i^{A_1} + \Theta_{A_2} x_i^{A_2} + \cdots + \Theta_{A_{M_1}} x_i^{A_{M_1}} + \Theta_{B_1} x_i^{B_1} + \Theta_{B_2} x_i^{B_2} + \cdots + \Theta_{B_{M_2}} x_i^{B_{M_2}} \tag{12}$$

In the formula, a value of $h(x_i)$ is a comprehensive inference value, $x_i^{A_1}$, $x_i^{A_2}$, ..., $x_i^{A_{M_1}}$ are first data corresponding to each of $M_1$ second devices; $\Theta_{A_1} x_i^{A_1}$, $\Theta_{A_2} x_i^{A_2}$, ..., $\Theta_{A_{M_1}} x_i^{A_{M_1}}$ are first inference values corresponding to each of the $M_1$ second devices; $x_i^{B_1}$, $x_i^{B_2}$, ..., $x_i^{B_{M_2}}$ are second data corresponding to each of $M_2$ second devices; and $\Theta_{B_1} x_i^{B_1}$, $\Theta_{B_2} x_i^{B_2}$, ..., $\Theta_{B_{M_2}} x_i^{B_{M_2}}$ are second inference values corresponding to each of the $M_2$ second devices.

For example, a first inference value corresponding to a second device #1 is $\Theta_{A_1} x_i^{A_1}$, and first data of the second device #1 includes p types of parameters. $\Theta_{A_1} x_i^{A_1} = \Theta_1 x_1 + \Theta_2 x_2 + \cdots + \Theta_p x_p$, where $x_1$, $x_2$, ..., $x_p$ are the p parameter types included in the first data of the second device #1, and $\Theta_1$, $\Theta_2$, ..., $\Theta_p$ are model parameters that are in a one-to-one correspondence with the p parameter types in the first data. Other first inference values and second inference values are similar, and details are not described again.

Embodiments of this application are described in detail below with reference to the accompanying drawings. In a schematic flowchart in this application, a corresponding method is illustrated by using an example in which a first device and a second device are used as execution bodies for an interaction example. However, the execution bodies for the interaction example are not limited in this application. For example, the first device in the figure may be a chip, a chip system, or a processor that supports the first device in implementing the corresponding method, or may be a logical module or software that can implement all or some functions of the first device. The second device in the figure may also be a chip, a chip system, or a processor that supports the second device in implementing the corresponding method, or may be a logical module or software that can implement all or some functions of the second device.

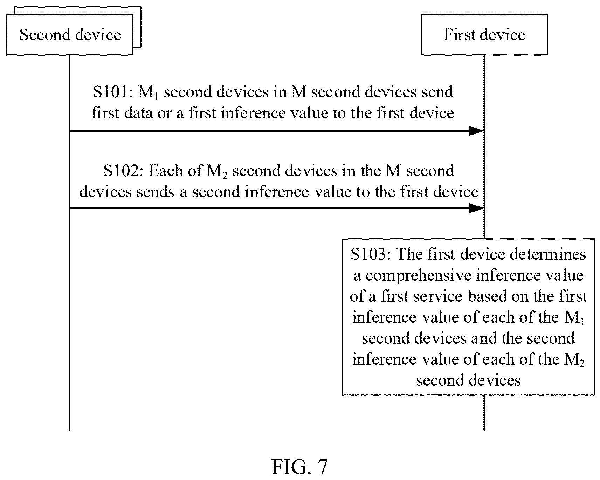

FIG. 7 is a schematic flowchart of a data processing method according to an embodiment of this application. The data processing method is described from a perspective of interaction between a first device and a second device. The data processing method includes the following steps.

S101: $M_1$ second devices in M second devices send first data or a first inference value to the first device. The M second devices are M second devices related to a first service, M is a positive integer, and $M_1$ is a positive integer less than or equal to M.

Correspondingly, the first device obtains a first inference value of each of the $M_1$ second devices. The first inference value is generated on the first device or the second device corresponding to the first inference value by using first data and a first model, and the second device corresponding to each of the first inference value, the first data, and the first model is a same second device in the $M_1$ second devices; the first data is data that is related to the first service and that can be sent to the first device; and the first model is determined by the first device. Optionally, the first inference value is in a one-to-one correspondence with the second device in the $M_1$ second devices; the first data is in a one-to-one correspondence with the second device in the $M_1$ second devices; and the first model is in a one-to-one correspondence with the second device in the $M_1$ second devices.

For example, the $M_1$ second devices include a second device #1 and a second device #2. Data that is in the second device #1 and that is related to the first service and that can be sent to the first device is first data #1, and it may be considered that the first data #1 corresponds to the second device #1. A first inference value #1 is generated by using the first data #1 and a first model #1, and it may be considered that the first inference value #1 corresponds to the second device #1, and that the first model #1 corresponds to the second device #1. Data that is in the second device #2 and that is related to the first service and that can be sent to the first device is first data #2, and it may be considered that the first data #2 corresponds to the second device #2. A first inference value #2 is generated by using the first data #2 and a first model #2, and it may be considered that the first inference value #2 corresponds to the second device #2, and that the first model #2 corresponds to the second device #2.

In an optional implementation, that the $M_1$ second devices in the M second devices send the first data or the first inference value to the first device may include: Each of the $M_1$ second devices sends corresponding first data to the first device; and correspondingly, the first device receives the first data from each of the $M_1$ second devices. In this case, the first inference value of each of the $M_1$ second devices is generated on the first device by using the first data and the first model. In other words, after receiving the first data from each of the $M_1$ second devices, the first device may further perform an operation of generating the first inference value by using the first data of each of the $M_1$ second devices and the first model, to obtain the first inference value of each of the $M_1$ second devices. In this case, each of the $M_1$ second devices may not calculate the corresponding first inference value. This helps reduce computational overheads of each of the $M_1$ second devices, so that a computing power requirement for each of the $M_1$ second devices can be reduced. When applied to a scenario in which computing resources or computing power of the $M_1$ second devices is limited, this implementation helps reduce impact on performance of the second device caused by use of a relatively large quantity of computing resources by each of the $M_1$ second devices to calculate the first inference value.

For example, $M_1$ is 2, and in the two second devices, a second device #1 sends first data #1 to the first device, and a second device #2 sends first data #2 to the first device. In this case, the first device may generate, by using the first data #1 and a first model #1, a first inference value #1 corresponding to the second device #1, and generate, by using the first data #2 and a first model #2, a first inference value #2 corresponding to the second device #2.

In another optional implementation, that the $M_1$ second devices in the M second devices send the first data or the first inference value to the first device may include: Each of the $M_1$ second devices sends the corresponding first inference value to the first device. Correspondingly, that the first device obtains the first inference value of each of the $M_1$ second devices includes: The first device receives the first inference value from each of the $M_1$ second devices. In this case, the first inference value of each of the $M_1$ second devices is generated in the second device corresponding to the first inference value by using the first data and the first model. In this case, the first device may not calculate the first inference value of each of the $M_1$ second devices, thereby reducing computational overheads of the first device. In addition, when applied to a scenario in which computing resources or computing power of the first device is limited, this implementation can reduce impact on performance of the first device caused by use of a relatively large quantity of computing resources by the first device to calculate the first inference value.

Optionally, the method may further include: The first device sends a corresponding first model to each of the $M_1$ second devices; and correspondingly, each of the $M_1$ second devices receives the first model from the first device. Optionally, the first device may further send a model identifier of the corresponding first model to each of the $M_1$ second devices.

For example, $M_1$ is 2, and the first device may send a first model #1 to a second device #1, and send a first model #2 to a second device #2. In this case, the second device #1 may generate a first inference value #1 by using first data #1 and the first model #1, and send the first inference value #1 to the first device; and the second device #2 may generate a first inference value #2 by using first data #2 and the first model #2, and send the first inference value #2 to the first device.

In still another optional implementation, that the $M_1$ second devices in the M second devices send the first data or the first inference value to the first device may include: Each of $M_3$ second devices in the $M_1$ second devices sends corresponding first data to the first device; and each of $M_4$ second devices in the $M_1$ second devices sends a corresponding first inference value to the first device, where $M_3$ is a positive integer less than $M_1$, and the $M_4$ second devices are $M_1$-$M_3$ second devices other than the $M_3$ second devices in the $M_1$ second devices. In this case, the first inference value of each of the $M_3$ second devices is generated on the first device by using the first data and the first model. This helps reduce computational overheads of each of the $M_3$ second devices, so that a computing power requirement for each of the $M_3$ second devices can be reduced. The first inference value of each of the $M_4$ second devices is generated in the second device corresponding to the first inference value by using the first data and the first model. This helps reduce computational overheads of the first device. In addition, the $M_3$ second devices and the $M_4$ second devices may be determined based on sizes of computing resources of the first device and sizes of computing resources of each of the $M_1$ second devices. This helps better balance and schedule computing resources of the first device and each of the $M_1$ second devices. For example, the $M_3$ second devices may be $M_3$ second devices that have fewer computing resources in the $M_1$ second devices.

Optionally, the method may further include: The first device sends a corresponding first model to each of the $M_4$

second devices; and correspondingly, each of the $M_4$ second devices receives the first model from the first device. Optionally, the first device may further send a model identifier of the corresponding first model to each of the $M_4$ second devices.

For example, $M_1$ is 3, $M_3$ is 2, and $M_4$ is 1. A second device #1 sends first data #1 to the first device, and a second device #2 sends first data #2 to the first device. In this case, the first device may generate, by using the first data #1 and a first model #1, a first inference value #1 corresponding to the second device #1, and generate, by using the first data #2 and a first model #2, a first inference value #2 corresponding to the second device #2. In addition, the first device sends a first model #3 to a second device #3, and the second device #3 may generate a first inference value #3 by using first data #3 and the first model #3, and send the first inference value #3 to the first device.

In an optional implementation, the method further includes: Each of the $M_1$ second devices sends a parameter type of the corresponding first data to the first device. Correspondingly, the first device receives the parameter type of the first data from each of the $M_1$ second devices. The parameter type of the first data of each of the $M_1$ second devices may be used by the first device to determine the first model corresponding to each of the $M_1$ second devices.

In an optional manner, that the first device determines the first model corresponding to each of the $M_1$ second devices may include: The first device determines, based on the parameter type of the first data of each of the $M_1$ second devices, the first model corresponding to each of the $M_1$ second devices. Specifically, the first device may determine, based on the parameter type of the first data of each of the $M_1$ second devices, a model architecture of the first model corresponding to each second device, and then perform model training based on the first data corresponding to each second device and the model architecture of the first model corresponding to each second device, to obtain the first model.

For example, first data corresponding to a second device #1 includes p types of parameters, and the first device may determine that a model architecture of a first model corresponding to the second device #1 is represented as $\Theta_1 x_1 + \Theta_2 x_2 + \cdots + \Theta_p x_p$, where $x_1, x_2, ..., x_p$ are the p parameter types included in the first data of the second device #1, and $\Theta_1, \Theta_2, ..., \Theta_p$ are model parameters in a one-to-one correspondence with the p parameter types in the first data. The first device may perform model training based on the first data corresponding to the second device #1, to determine $\Theta_1, \Theta_2, ..., \Theta_p$, thereby obtaining the first model.

In another optional manner, that the first device determines the first model corresponding to each of the $M_1$ second devices may include: The first device sends a parameter type of the first data of each of the $M_1$ second devices to a third device; the third device determines, based on the parameter type of the first data of each of the $M_1$ second devices, the first model corresponding to each of the $M_1$ second devices, and sends, to the first device, the first model corresponding to each of the $M_1$ second devices. Correspondingly, the first device receives, from the third device, the first model corresponding to each of the $M_1$ second devices.

The third device may be an artificial intelligence (artificial intelligence, AI) training platform independent of the first device. That the third device sends, to the first device, the first model corresponding to each of the $M_1$ second devices may include: The third device sends, to the first device, a model parameter of the first model corresponding to each of the $M_1$ second devices. Optionally, the third device may further send, to the first device, the model identifier of the first model corresponding to each of the $M_1$ second devices.

For example, a model architecture of a first model corresponding to a second device #1 is represented as $\Theta_1 x_1 + \Theta_2 x_2 + \cdots + \Theta_p x_p$, and the third device may perform model training based on first data corresponding to the second device #1 and the model architecture of the first model corresponding to the second device #1, to determine $\Theta_1, \Theta_2, ..., \Theta_p$, and send $\Theta_1, \Theta_2, ..., \Theta_p$ to the first device.

In addition, an operation of determining, by the third device based on the parameter type of the first data of each of the $M_1$ second devices, the first model corresponding to each of the $M_1$ second devices is similar to an operation of determining, by the first device based on the parameter type of the first data of each of the $M_1$ second devices, the first model corresponding to each of the $M_1$ second devices, and details are not described again.

S102: Each of $M_2$ second devices in the M second devices sends a second inference value to the first device. Correspondingly, the first device receives the second inference value from each of the $M_2$ second devices. $M_2$ is a positive integer less than or equal to M.

The second inference value is generated on the second device corresponding to the second inference value by using second data and a second model, and the second device corresponding to each of the second inference value, the second data, and the second model is a same second device in the $M_2$ second devices. The second data is data that is related to the first service and that is not allowed to be sent to the first device, and the second model is determined by the second device corresponding to the second model. In other words, before sending the second inference value to the first device, each of the $M_2$ second devices may further perform an operation of generating the second inference value by using the second data and the second model. Optionally, the second inference value is in a one-to-one correspondence with the second device in the $M_2$ second devices; the second data is in a one-to-one correspondence with the second device in the $M_2$ second devices; and the second model is in a one-to-one correspondence with the second device in the $M_2$ second devices.

For example, the $M_2$ second devices include a second device #1 and a second device #2. Data that is in the second device #1 and that is related to the first service and that is not allowed to be sent to the first device is second data #1, and it may be considered that the second data #1 corresponds to the second device #1. The second device #1 sends a second inference value #1 to the first device, and it may be considered that the second inference value #1 corresponds to the second device #1. In the second device #1, the second inference value #1 may be generated by using the second data #1 and a second model #1, and it may be considered that the second model #1 corresponds to the second device #1. Data that is in the second device #2 and that is related to the first service and that is not allowed to be sent to the first device is second data #2, and it may be considered that the second data #2 corresponds to the second device #2. The second device #2 sends a second inference value #2 to the first device, and it may be considered that the second inference value #2 corresponds to the second device #2. In the second device #2, the second inference value #2 may be generated by using the second data #2 and a second model #2, and it may be considered that the second model #2 corresponds to the second device #1.

In addition, the $M_2$ second devices may be entirely different from the $M_1$ second devices, and a sum of $M_2$ and $M_1$ is equal to M. For example, M is equal to 4, and the M second devices include a second device #1, a second device #2, a second device #3, and a second device #4; $M_1$ is equal to 2, and the $M_1$ second devices are the second device #1 and the second device #2; and $M_2$ is equal to 2, and the $M_2$ second devices are the second device #3 and the second device #4. In this case, the first device may obtain a first inference value #1 of the second device #1 and a first inference value #2 of the second device #2, and the first device may further receive a second inference value #1 from the second device #3 and a second inference value #2 from the second device #4.

Alternatively, the $M_2$ second devices and the $M_1$ second devices may be partially the same, and each same second device has both the first data that can be sent to the first device and the second data that is not allowed to be sent to the first device. For example, M is equal to 3, and the M second devices include a second device #1, a second device #2, and a second device #3; $M_1$ is equal to 2, and the $M_1$ second devices are the second device #1 and the second device #2; and $M_2$ is equal to 2, and the $M_2$ second devices are the second device #2 and the second device #3. In this case, the first device may obtain a first inference value #1 of the second device #1 and a first inference value #2 of the second device #2, and the first device may further receive a second inference value #1 from the second device #2 and a second inference value #2 from the second device #3.

Alternatively, the $M_2$ second devices and the $M_1$ second devices may be entirely the same, and $M_2$ is equal to $M_1$ and equal to M. In other words, each of the M second devices has both the first data that can be sent to the first device and the second data that is not allowed to be sent to the first device. For example, $M_2 = M_1 = M = 2$, and the M second devices are a second device #1 and a second device #2. In this case, the first device may obtain a first inference value #1 of the second device #1 and a first inference value #2 of the second device #2, and the first device may further receive a second inference value #1 from the second device #1 and a second inference value #2 from the second device #2.

In an optional implementation, the method may further include: Each of the $M_2$ second devices determines, based on a parameter type of second data corresponding to the second device, a second model corresponding to the second device. The operation is similar to the foregoing operation of determining, by the first device based on the parameter type of the first data of each of the $M_1$ second devices, the first model corresponding to each of the $M_1$ second devices, and details are not described again.

In an optional implementation, the method may further include: Each of the M second devices sends association information to the first device; and correspondingly, the first device receives the association information from each of the M second devices. Association information of different second devices may be different. For example, association information of a terminal device may include a subscription permanent identifier (subscription permanent identifier, SUPI) or an international mobile station equipment identity (international mobile station equipment identity, IMEI). Association identifier of a base station may include an N2/N3 tunnel (Tunnel) ID. Association information of a CN device may include an SUPI/IMEI, an N2/N3 tunnel ID, and an Internet Protocol (Internet protocol, IP) quintuple. Association information of an AF network element may include an IP quintuple.

S103: The first device determines a comprehensive inference value of the first service based on the first inference value of each of the $M_1$ second devices and the second inference value of each of the $M_2$ second devices.

The comprehensive inference value may be equal to a value obtained by performing an addition operation on the first inference value of each of the $M_1$ second devices and the second inference value of each of the $M_2$ second devices. For example, M is equal to 2, and the M second devices include a second device #1 and a second device #2; $M_1$ is equal to 2, and the $M_1$ second devices include a first device #1 and a first device #2, and the first device may obtain a first inference value #1 of the first device #1 and a first inference value #2 of the first device #2; and $M_2$ is equal to, and the $M_2$ second devices include the first device #1, and the first device may receive a second inference value #1 from the first device #1. In this case, the comprehensive inference value of the first service may be equal to a sum of the first inference value #1, the first inference value #2, and the second inference value #1.

In summary, in the data processing method, the first inference value is generated on the first device or the second device corresponding to the first inference value by using the first data and the first model, the first inference value, the first data, and the first model correspond to the same second device in the $M_1$ second devices, and the first model is determined by the first device. The second inference value is generated on the second device corresponding to the second inference value by using the second data and the second model, and the second inference value, the second data, and the second model correspond to the same second device in the $M_2$ second devices. In this way, each of the $M_2$ second devices may not send the corresponding second data to the first device, thereby ensuring security of the second data of each of the $M_2$ second devices. In addition, the first model of each of the $M_1$ second devices may be determined by the first device, the second model of each of the $M_2$ second devices may be determined by the second device, and an operation of determining the first model and an operation of determining the second model may be performed simultaneously, which is more efficient, thereby helping effectively determine the comprehensive inference value of the first service. Further, when the data processing method is applied to a scenario in which an inference value is a MOS, a MOS of a service can be effectively determined while ensuring privacy and security of private data. In addition, compared with a manner in which the first model of each of the $M_1$ second devices is determined by the second device, an operation of determining the first model by the first device may further reduce computational overheads of each of the $M_1$ second devices.

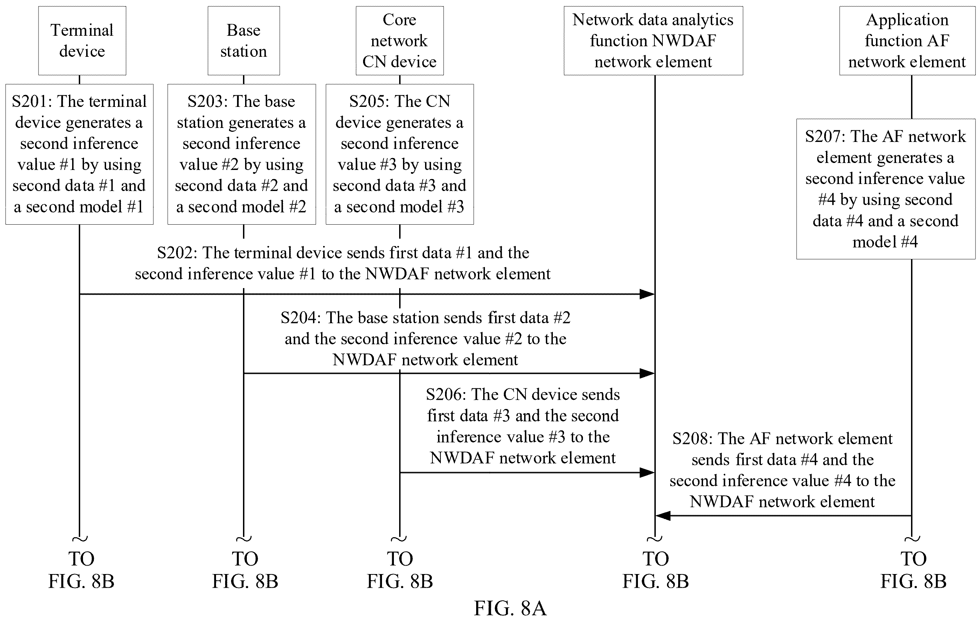

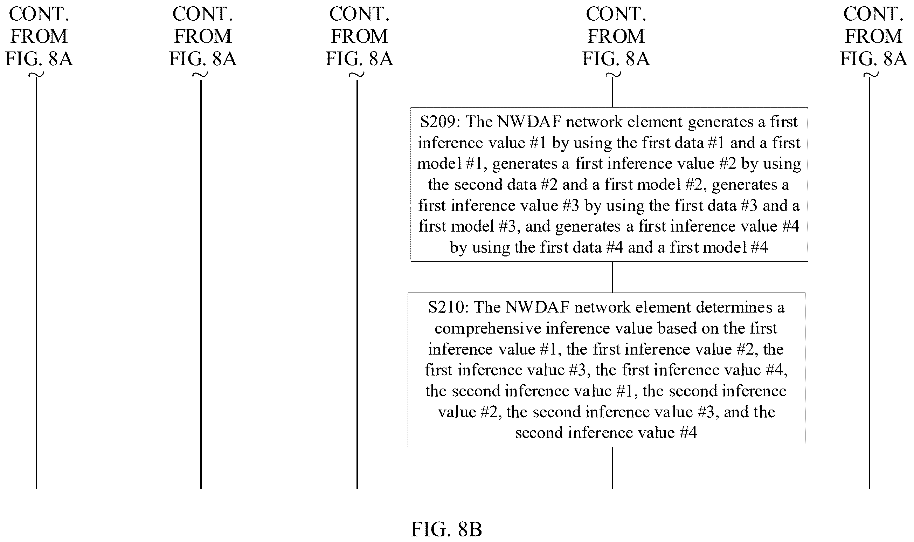

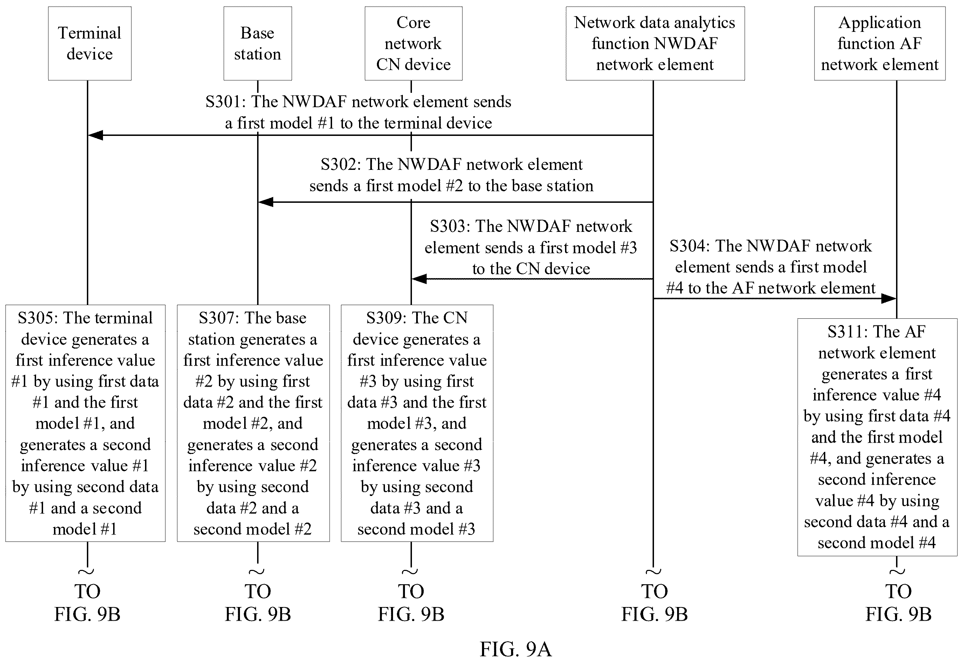

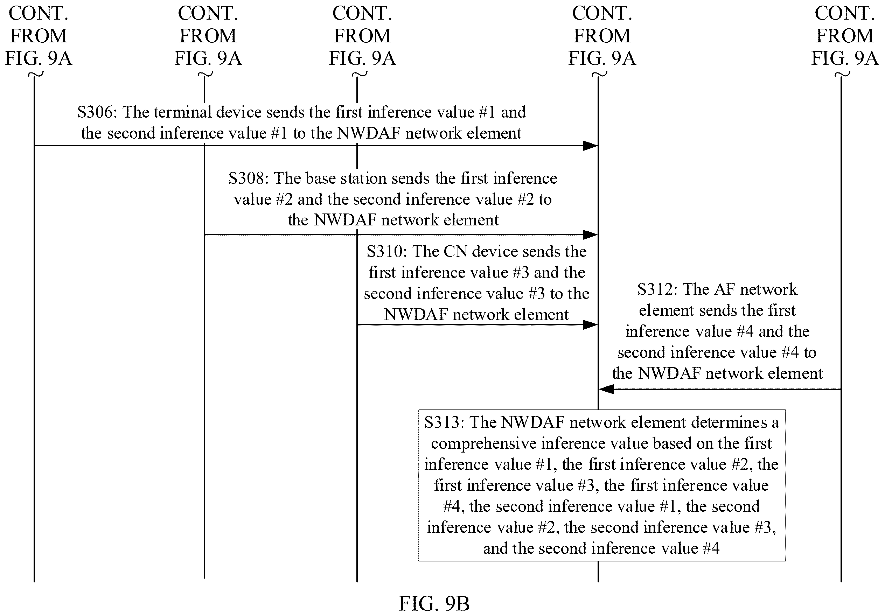

An example in which a first device is an NWDAF network element, $M = M_1 = M_2 = 4$, M second devices are a terminal device, a base station, a CN device, and an AF network element respectively, and a third platform is an AI training platform is used below. A data processing method in a scenario in which first inference values of the four second devices are all generated on the first device is described with reference to FIG. 8A and FIG. 8B. A data processing method in a scenario in which first inference values of the four second devices are all generated on the second devices is described with reference to FIG. 9A and FIG. 9B.

With reference to FIG. 8A and FIG. 8B, in the scenario in which all the first inference values of the four second devices are generated on the first device, a procedure of the data processing method may include the following steps.

S201: The terminal device generates a second inference value #1 by using second data #1 and a second model #1.

S202: The terminal device sends first data #1 and the second inference value #1 to the NWDAF network element. Correspondingly, the NWDAF network element receives the first data #1 and the second inference value #1 from the terminal device.

S203: The base station generates a second inference value #2 by using second data #2 and a second model #2.

S204: The base station sends first data #2 and the second inference value #2 to the NWDAF network element. Correspondingly, the NWDAF network element receives the first data #2 and the second inference value #2 from the base station.

S205: The CN device generates a second inference value #3 by using second data #3 and a second model #3.

S206: The CN device sends first data #3 and the second inference value #3 to the NWDAF network element. Correspondingly, the NWDAF network element receives the first data #3 and the second inference value #3 from the base station.

S207: The AF network element generates a second inference value #4 by using second data #4 and a second model #4.

S208: The AF network element sends first data #4 and the second inference value #4 to the NWDAF network element. Correspondingly, the NWDAF network element receives the first data #4 and the second inference value #4 from the base station.

A sequence of steps S201, S203, S205, and S207 is not limited in this embodiment of this application.

S209: The NWDAF network element generates a first inference value #1 by using the first data #1 and a first model #1, generates a first inference value #2 by using the second data #2 and a first model #2, generates a first inference value #3 by using the first data #3 and a first model #3, and generates a first inference value #4 by using the first data #4 and a first model #4.

In an optional implementation, the method may further include: The terminal device sends a parameter type of the first data #1 to the NWDAF network element; the base station sends a parameter type of the first data #2 to the NWDAF network element; the CN device sends a parameter type of the first data #3 to the NWDAF network element; and the AF network element sends a parameter type of the first data #4 to the NWDAF network element.

In an optional manner, the method may further include: The NWDAF network element determines the first model #1 based on the first data #1 and the parameter type of the first data #1, determines the first model #2 based on the first data #2 and the parameter type of the first data #2, determines the first model #3 based on the first data #3 and the parameter type of the first data #3, and determines the first model #4 based on the first data #4 and the parameter type of the first data #4.

In another optional manner, the method may further include: The NWDAF network element sends the first data #1 and the parameter types of the first data #1, the first data #2 and the parameter type of the first data #2, the first data #3 and the parameter type of the first data #3, and the first data #4 and the parameter type of the first data #4 to the AI training platform. The AI training platform determines the first model #1 based on the first data #1 and the parameter type of the first data #1, determines the first model #2 based on the first data #2 and the parameter type of the first data #2, determines the first model #3 based on the first data #3 and the parameter type of the first data #3, determines the first model #4 based on the first data #4 and the parameter type of the first data #4, and sends the first model #1, the first model #2, the first model #3, and the first model #4 to the NWDAF network element.

S210: The NWDAF network element determines a comprehensive inference value based on the first inference value #1, the first inference value #2, the first inference value #3, the first inference value #4, the second inference value #1, the second inference value #2, the second inference value #3, and the second inference value #4. The comprehensive inference value may be equal to a sum of the first inference value #1, the first inference value #2, the first inference value #3, the first inference value #4, the second inference value #1, the second inference value #2, the second inference value #3, and the second inference value #4.

For detailed descriptions of steps S201 to S210, refer to related descriptions in the data processing method shown in FIG. 7. Details are not described again. In addition, this embodiment may further include another implementation of the data processing method shown in FIG. 7, and there are also corresponding beneficial effects. Details are not described again.

With reference to FIG. 9A and FIG. 9B, in the scenario in which all the first inference values of the four second devices are generated on the second devices, a procedure of the data processing method may include the following steps.

S301: The NWDAF network element sends a first model #1 to the terminal device; and correspondingly, the terminal device receives the first model #1 from the NWDAF network element.

S302: The NWDAF network element sends a first model #2 to the base station; and correspondingly, the base station receives the first model #2 from the NWDAF network element.

S303: The NWDAF network element sends a first model #3 to the CN device; and correspondingly, the CN device receives the first model #3 from the NWDAF network element.

S304: The NWDAF network element sends a first model #4 to the AF network element; and correspondingly, the AF network element receives the first model #4 from the NWDAF network element.

A sequence of steps S301, S302, S303, and S304 is not limited in this embodiment of this application.

In an optional implementation, the method may further include: The terminal device sends first data #1 and a parameter type of the first data #1 to the NWDAF network element; the base station sends first data #2 and a parameter type of the first data #2 to the NWDAF network element; the CN device sends first data #3 and a parameter type of the first data #3 to the NWDAF network element; and the AF network element sends first data #4 and a parameter type of the first data #4 to the NWDAF network element.

In an optional manner, the method may further include: The NWDAF network element determines the first model #1 based on the first data #1 and the parameter type of the first data #1, determines the first model #2 based on the first data #2 and the parameter type of the first data #2, determines the first model #3 based on the first data #3 and the parameter type of the first data #3, and determines the first model #4 based on the first data #4 and the parameter type of the first data #4.

In another optional manner, the method may further include: The NWDAF network element sends the first data #1 and the parameter types of the first data #1, the first data #2 and the parameter type of the first data #2, the first data #3 and the parameter type of the first data #3, and the first data #4 and the parameter type of the first data #4 to the AI training platform. The AI training platform determines the first model #1 based on the first data #1 and the parameter type of the first data #1, determines the first model #2 based on the first data #2 and the parameter type of the first data #2, determines the first model #3 based on the first data #3 and the parameter type of the first data #3, determines the first model #4 based on the first data #4 and the parameter type of the first data #4, and sends the first model #1, the first model #2, the first model #3, and the first model #4 to the NWDAF network element.

S305: The terminal device generates a first inference value #1 by using the first data #1 and the first model #1, and generates a second inference value #1 by using second data #1 and a second model #1.

S306: The terminal device sends the first inference value #1 and the second inference value #1 to the NWDAF network element; and correspondingly, the NWDAF network element receives the first inference value #1 and the second inference value #1 from the terminal device.

S307: The base station generates a first inference value #2 by using the first data #2 and the first model #2, and generates a second inference value #2 by using second data #2 and a second model #2.

S308: The base station sends the first inference value #2 and the second inference value #2 to the NWDAF network element; and correspondingly, the NWDAF network element receives the first inference value #2 and the second inference value #2 from the terminal device.

S309: The CN device generates a first inference value #3 by using the first data #3 and the first model #3, and generates a second inference value #3 by using second data #3 and a second model #3.

S310: The CN device sends the first inference value #3 and the second inference value #3 to the NWDAF network element; and correspondingly, the NWDAF network element receives the first inference value #3 and the second inference value #3 from the terminal device.

S311: The AF network element generates a first inference value #4 by using the first data #4 and the first model #4, and generates a second inference value #4 by using second data #4 and a second model #4.

S312: The AF network element sends the first inference value #4 and the second inference value #4 to the NWDAF network element; and correspondingly, the NWDAF network element receives the first inference value #4 and the second inference value #4 from the terminal device.

A sequence of steps S305, S307, S309, and S311 is not limited in this embodiment of this application.

S313: The NWDAF network element determines a comprehensive inference value based on the first inference value #1, the first inference value #2, the first inference value #3, the first inference value #4, the second inference value #1, the second inference value #2, the second inference value #3, and the second inference value #4. The comprehensive inference value may be equal to a sum of the first inference value #1, the first inference value #2, the first inference value #3, the first inference value #4, the second inference value #1, the second inference value #2, the second inference value #3, and the second inference value #4.

For detailed descriptions of steps S301 to S303, refer to related descriptions in the data processing method shown in FIG. 7. Details are not described again. In addition, this embodiment may further include another implementation of the data processing method shown in FIG. 7, and there are also corresponding beneficial effects. Details are not described again.

To implement functions in the foregoing methods provided in embodiments of this application, the first device or the second device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

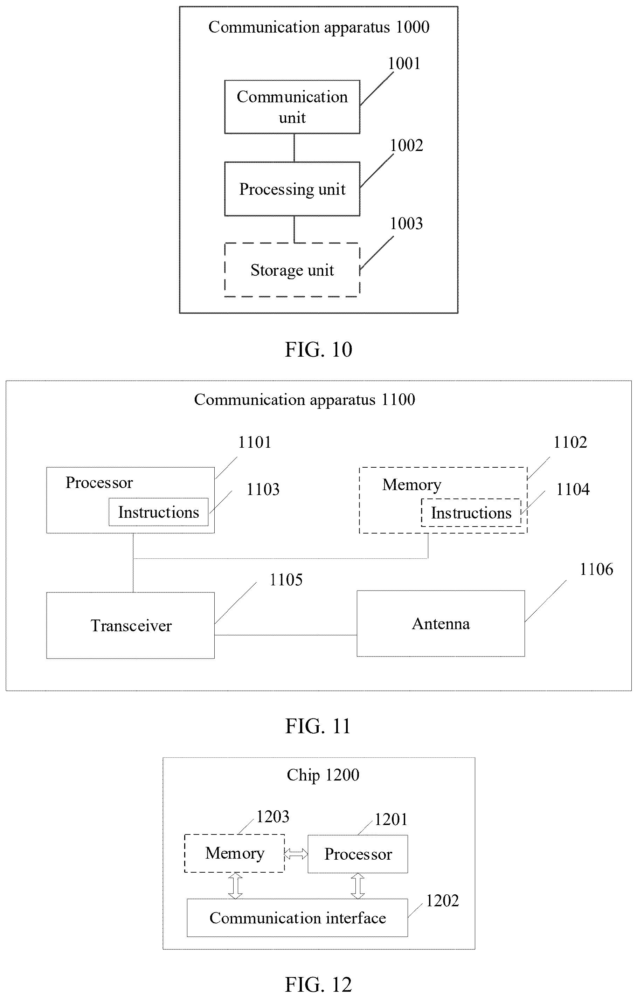

FIG. 10 shows a communication apparatus 1000 according to an embodiment of this application. The communication apparatus 1000 may be a component (for example, an integrated circuit or a chip) of a first device, or may be a component (for example, an integrated circuit or a chip) of a second device. Alternatively, the communication apparatus 1000 may be another communication unit 1001, configured to implement the methods in method embodiments of this application. The communication apparatus 1000 may include a communication unit 1001 and a processing unit 1002. The processing unit 1002 is configured to control the communication unit 1001 to receive and send data/signaling. Optionally, the communication apparatus 1000 may further include a storage unit 1003.

In a possible design, the processing unit 1002 is configured to obtain a first inference value of each of $M_1$ second devices in M second devices related to a first service;

the communication unit 1001 is configured to receive a second inference value from each of $M_2$ second devices in the M second devices, where M is a positive integer, and both $M_1$ and $M_2$ are positive integers less than or equal to M, where

the first inference value is generated on the communication apparatus or the second device corresponding to the first inference value by using first data and a first model, the second device corresponding to each of the first inference value, the first data, and the first model is a same second device in the $M_1$ second devices, and the first model is determined by the communication apparatus; and the second inference value is generated on the second device corresponding to the second inference value by using second data and a second model, and the second device corresponding to each of the second inference value, the second data, and the second model is a same second device in the $M_2$ second devices; and

the processing unit 1002 is further configured to determine a comprehensive inference value of the first service based on the first inference value of each of the $M_1$ second devices and the second inference value of each of the $M_2$ second devices.

In an optional implementation, the first inference value is in a one-to-one correspondence with the second device in the $M_1$ second devices; the first data is in a one-to-one correspondence with the second device in the $M_1$ second devices; the first model is in a one-to-one correspondence with the second device in the $M_1$ second devices; the second inference value is in a one-to-one correspondence with the second device in the $M_2$ second devices; the second data is in a one-to-one correspondence with the second device in the $M_2$ second devices; and the second model is in a one-to-one correspondence with the second device in the $M_2$ second devices.

In an optional implementation, the communication unit 1001 is further configured to receive first data from each of the $M_1$ second devices.

In an optional implementation, the communication unit 1001 is further configured to send a corresponding first model to each of the $M_1$ second devices; and that the processing unit 1002 obtains the first inference value of each of the $M_1$ second devices in the M second devices related to the first service includes: receiving the first inference value from each of the $M_1$ second devices.

In an optional implementation, the communication unit 1001 is further configured to receive first data from each of $M_3$ second devices in the $M_1$ second devices, where $M_3$ is a positive integer less than $M_1$; and the communication unit 1001 is further configured to send, to each of $M_4$ second devices in the $M_1$ second devices, a first model corresponding to the second device, and receive a first inference value from each of the $M_4$ second devices, where the $M_4$ second devices are $M_1$-$M_3$ second devices other than the $M_3$ second devices in the $M_1$ second devices.

In an optional implementation, the communication unit 1001 is further configured to receive a parameter type of the first data from each of the $M_1$ second devices; and the processing unit 1002 is further configured to determine, based on the parameter type of the first data of each of the $M_1$ second devices, the first model corresponding to each of the $M_1$ second devices.

In an optional implementation, the communication unit 1001 is further configured to receive a parameter type of the first data from each of the $M_1$ second devices; the communication unit 1001 is further configured to send the parameter type of the first data of each of the $M_1$ second devices to a third device; and the communication unit 1001 is further configured to receive, from the third device, the first model corresponding to each of the $M_1$ second devices.

In another possible design, the communication unit 1001 is configured to send first data to a first device; or receive a first model from a first device, and send a first inference value to the first device, where the first data is data that is related to a first service and that can be sent to the first device, and the first inference value is generated on the communication apparatus by using the first data and the first model; and

the communication unit 1001 is further configured to send a second inference value to the first device, where the second inference value is generated on the communication apparatus by using second data and a second model, and the second data is data that is related to the first service and that is not allowed to be sent to the first device.

In an optional implementation, the communication unit 1001 is further configured to send a parameter type of the first data to the first device, where the parameter type of the first data is used by the first device to determine the first model.

This embodiment of this application and the foregoing method embodiments are based on a same concept, and bring same technical effects. For a specific principle, refer to the descriptions of the foregoing embodiments. Details are not described again.

An embodiment of this application further provides a communication apparatus 1100, as shown in FIG. 11. The communication apparatus 1100 may be a first device or a second device, or may be a chip, a chip system, a processor, or the like that supports a first device in implementing the foregoing methods, or may be a chip, a chip system, a processor, or the like that supports a second device in implementing the foregoing methods. The apparatus may be configured to implement the methods described in the foregoing method embodiments. For details, refer to the descriptions in the foregoing method embodiments.

The communication apparatus 1100 may include one or more processors 1101. The processor may be configured to implement some or all functions of the first device or the second device by using a logic circuit or by running a computer program. The processor 1101 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1100 may include one or more memories 1102, and the memory may store instructions 1104. The instructions may be run on the processor 1101, so that the communication apparatus 1100 performs the methods described in the foregoing method embodiments. Optionally, the memory 1102 may further store data. The processor 1101 and the memory 1102 may be disposed separately, or may be integrated together.

The memory 1102 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 1100 may further include a transceiver 1105 and an antenna 1106. The transceiver 1105 may be referred to as a transceiver unit, a transceiver, a transceiver circuit, or the like, and is configured to implement a transceiver function. The transceiver 1105 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, when the communication apparatus 1100 is a first device, the processor 1101 is configured to obtain a first inference value of each of $M_1$ second devices in M second devices related to a first service;

the transceiver 1105 is configured to receive a second inference value from each of $M_2$ second devices in the M second devices, where M is a positive integer, and both $M_1$ and $M_2$ are positive integers less than or equal to M, where the first inference value is generated on the communication apparatus or the second device corresponding to the first inference value by using first data and a first model, the second device corresponding to each of the first inference value, the first data, and the first model is a same second device in the $M_1$ second devices, and the first model is determined by the communication apparatus; and the second inference value is generated on the second device corresponding to the second inference value by using second data and a second model, and the second device corresponding to each of the second inference value, the second data, and the second model is a same second device in the $M_2$ second devices; and

the processor 1101 is further configured to determine a comprehensive inference value of the first service based on the first inference value of each of the $M_1$ second devices and the second inference value of each of the $M_2$ second devices.

In an optional implementation, the first inference value is in a one-to-one correspondence with the second device in the $M_1$ second devices; the first data is in a one-to-one correspondence with the second device in the $M_1$ second devices; the first model is in a one-to-one correspondence with the second device in the $M_1$ second devices; the second inference value is in a one-to-one correspondence with the second device in the $M_2$ second devices; the second data is in a one-to-one correspondence with the second device in the $M_2$ second devices; and the second model is in a one-to-one correspondence with the second device in the $M_2$ second devices.

In an optional implementation, the transceiver 1105 is further configured to receive first data from each of the $M_1$ second devices.

In an optional implementation, the transceiver 1105 is further configured to send a corresponding first model to each of the $M_1$ second devices; and that the processor 1101 obtains the first inference value of each of the $M_1$ second devices in the M second devices related to the first service includes: receiving the first inference value from each of the $M_1$ second devices.

In an optional implementation, the transceiver 1105 is further configured to receive first data from each of $M_3$ second devices in the $M_1$ second devices, where $M_3$ is a positive integer less than $M_1$; and the transceiver 1105 is further configured to send, to each of $M_4$ second devices in the $M_1$ second devices, a first model corresponding to the second device, and receive a first inference value from each of the $M_4$ second devices, where the $M_4$ second devices are $M_1$-$M_3$ second devices other than the $M_3$ second devices in the $M_1$ second devices.

In an optional implementation, the transceiver 1105 is further configured to receive a parameter type of the first data from each of the $M_1$ second devices; and the processor 1101 is further configured to determine, based on the parameter type of the first data of each of the $M_1$ second devices, the first model corresponding to each of the $M_1$ second devices.

In an optional implementation, the transceiver 1105 is further configured to receive a parameter type of the first data from each of the $M_1$ second devices; the transceiver 1105 is further configured to send the parameter type of the first data of each of the $M_1$ second devices to a third device; and the transceiver 1105 is further configured to receive, from the third device, the first model corresponding to each of the $M_1$ second devices.

In another possible design, when the communication apparatus 1100 is a second device, the transceiver 1105 is configured to send first data to a first device; or receive a first model from a first device, and send a first inference value to the first device, where the first data is data that is related to a first service and that can be sent to the first device, and the first inference value is generated on the communication apparatus by using the first data and the first model; and

the transceiver 1105 is further configured to send a second inference value to the first device, where the second inference value is generated on the communication apparatus by using second data and a second model, and the second data is data that is related to the first service and that is not allowed to be sent to the first device.

In an optional implementation, the transceiver 1105 is further configured to send a parameter type of the first data to the first device, where the parameter type of the first data is used by the first device to determine the first model.

In another possible design, the processor 1101 may include a transceiver configured to implement receiving and sending functions. For example, the transceiver may be a transceiver circuit, a communication interface, or an interface circuit. The transceiver circuit, the communication interface, or the interface circuit configured to implement the receiving and sending functions may be separated, or may be integrated together. The transceiver circuit, the communication interface, or the interface circuit may be configured to read and write code/data. Alternatively, the transceiver circuit, the communication interface, or the interface circuit may be configured to transmit or transfer a signal.

In still another possible design, optionally, the processor 1101 may store instructions 1103. When the instructions 1103 are executed on the processor 1101, the communication apparatus 1100 is enabled to perform the methods described in the foregoing method embodiments. The instructions 1103 may be embedded in the processor 1101. In this case, the processor 1101 may be implemented by hardware.

In still another possible design, the communication apparatus 1100 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (nMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiment may be the first device or the second device. However, the scope of the communication apparatuses described in embodiments of this application is not limited thereto, and structures of the communication apparatuses may not be limited by FIG. 11. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and an instruction;
(3) an ASIC, like a modem (modulator);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown in FIG. 12. The chip 1200 shown in FIG. 12 includes a processor 1201 and a communication interface 1202. There may be one or more processors 1201, and there may be a plurality of communication interfaces 1202. The processor 1201 may be a logic circuit, and the communication interface 1202 may be an input/output interface, an input interface, or an output interface. The chip 1200 may further include a memory 1203.

In a design, for a case in which the chip is configured to implement a function of a first device in this embodiment of this application:

the processor 1201 is configured to obtain a first inference value of each of $M_1$ second devices in M second devices related to a first service;
the communication interface 1202 is configured to receive a second inference value from each of $M_2$ second devices in the M second devices, where M is a positive integer, and both $M_1$ and $M_2$ are positive integers less than or equal to M, where
the first inference value is generated on the chip or the second device corresponding to the first inference value by using first data and a first model, the second device corresponding to each of the first inference value, the first data, and the first model is a same second device in the $M_1$ second devices, and the first model is determined by the chip; and the second inference value is generated on the second device corresponding to the second inference value by using second data and a second model, and the second device corresponding to each of the second inference value, the second data, and the second model is a same second device in the $M_2$ second devices; and
the processor 1201 is further configured to determine a comprehensive inference value of the first service based on the first inference value of each of the $M_1$ second devices and the second inference value of each of the $M_2$ second devices.

In another design, for a case in which the chip is configured to implement a function of a second device in this embodiment of this application:

the communication interface 1202 is configured to send first data to a first device; or receive a first model from a first device, and send a first inference value to the first device, where the first data is data that is related to a first service and that can be sent to the first device, and the first inference value is generated on the chip by using the first data and the first model; and
the communication interface 1202 is further configured to send a second inference value to the first device, where the second inference value is generated on the chip by using second data and a second model, and the second data is data that is related to the first service and that is not allowed to be sent to the first device.

In this embodiment of this application, the communication apparatus 1100 and the chip 1200 may further perform implementations described in the foregoing communication apparatus 1000. A person skilled in the art may further understand that various illustrative logical blocks (illustrative logical blocks) and steps (steps) that are listed in embodiments of this application may be implemented by using electronic hardware, computer software, or a combination thereof.

Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing data processing method are based on a same concept, and bring same technical effects. For a specific principle, refer to the descriptions in the foregoing data processing method. Details are not described again.

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes the first device and the M second devices in the foregoing aspects. In another possible design, the system may further include another device that interacts with the first device and/or one or more of the M second devices in the solutions provided in this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A data processing method, applied to a first device, wherein the method comprises:

obtaining a first inference value of each of $M_1$ second devices in M second devices related to a first service, and receiving a second inference value from each of $M_2$ second devices in the M second devices, wherein M is a positive integer, and both $M_1$ and $M_2$ are positive integers less than or equal to M, wherein

the first inference value is generated on the first device or the second device corresponding to the first inference value by using first data and a first model, the second device corresponding to each of the first inference value, the first data, and the first model is a same second device in the $M_1$ second devices, and the first model is determined by the first device; and

the second inference value is generated on the second device corresponding to the second inference value by using second data and a second model, and the second device corresponding to each of the second inference value, the second data, and the second model is a same second device in the $M_2$ second devices; and

determining a comprehensive inference value of the first service based on the first inference value of each of the $M_1$ second devices and the second inference value of each of the $M_2$ second devices.

2. The method according to claim 1, wherein

the first inference value is in a one-to-one correspondence with the second device in the $M_1$ second devices;

the first data is in a one-to-one correspondence with the second device in the $M_1$ second devices;

the first model is in a one-to-one correspondence with the second device in the $M_1$ second devices;

the second inference value is in a one-to-one correspondence with the second device in the $M_2$ second devices;

the second data is in a one-to-one correspondence with the second device in the $M_2$ second devices; and

the second model is in a one-to-one correspondence with the second device in the $M_2$ second devices.

3. The method according to claim 1 or 2, wherein the method further comprises:
receiving first data from each of the $M_1$ second devices.

4. The method according to claim 1 or 2, wherein the method further comprises:

sending a corresponding first model to each of the $M_1$ second devices; and

obtaining the first inference value of each of the $M_1$ second devices in the M second devices related to the first service comprises:

receiving the first inference value from each of the $M_1$ second devices.

5. The method according to claim 1 or 2, wherein the method further comprises:

receiving first data from each of $M_3$ second devices in the $M_1$ second devices, wherein $M_3$ is a positive integer less than $M_1$; and

sending, to each of $M_4$ second devices in the $M_1$ second devices, a first model corresponding to the second device, and receiving a first inference value from each of the $M_4$ second devices, wherein the $M_4$ second devices are $M_1$-$M_3$ second devices other than the $M_3$ second devices in the $M_1$ second devices.

6. The method according to any one of claims 1 to 5, wherein the method further comprises:

receiving a parameter type of the first data from each of the $M_1$ second devices; and

determining, based on the parameter type of the first data of each of the $M_1$ second devices, the first model corresponding to each of the $M_1$ second devices.

7. The method according to any one of claims 1 to 5, wherein the method further comprises:

receiving a parameter type of the first data from each of the $M_1$ second devices;

sending the parameter type of the first data of each of the $M_1$ second devices to a third device; and

receiving, from the third device, the first model corresponding to each of the $M_1$ second devices.

8. A data processing method, applied to a second device, wherein the method comprises:

sending first data to a first device; or receiving a first model from a first device, and sending a first inference value to the first device, wherein

the first data is data that is related to a first service and that can be sent to the first device, and the first inference value is generated on the second device by using the first data and the first model; and

sending a second inference value to the first device, wherein the second inference value is generated on the second device by using second data and a second model, and the second data is data that is related to the first service and that is not allowed to be sent to the first device.

9. The method according to claim 8, wherein the method further comprises:

sending a parameter type of the first data to the first device, wherein the parameter type of the first data is used by the first device to determine the first model.

10. A data processing method, wherein the method comprises:

sending, by $M_1$ second devices in M second devices related to a first service, first data or a first inference value to a first device;

sending, by each of $M_2$ second devices in the M second devices, a second inference value to the first device, wherein M is a positive integer, and both $M_1$ and $M_2$ are positive integers less than or equal to M; and

determining, by the first device, a comprehensive inference value of the first service based on a first inference value of each of the $M_1$ second devices and the second inference value of each of the $M_2$ second devices, wherein the first inference value is generated on the first device or the second device corresponding to the first inference value by using the first data and a first model, the second device corresponding to each of the first inference value, the first data, and the first model is a same second device in the $M_1$ second devices, and the first model is determined by the first device; and

the second inference value is generated on the second device corresponding to the second inference value by using second data and a second model, and the second device corresponding to each of the second inference value, the second data, and the second model is a same second device in the $M_2$ second devices.

11. The method according to claim 10, wherein

the first inference value is in a one-to-one correspondence with the second device in the $M_1$ second devices;
the first data is in a one-to-one correspondence with the second device in the $M_1$ second devices;
the first model is in a one-to-one correspondence with the second device in the $M_1$ second devices;
the second inference value is in a one-to-one correspondence with the second device in the $M_2$ second devices;
the second data is in a one-to-one correspondence with the second device in the $M_2$ second devices; and
the second model is in a one-to-one correspondence with the second device in the $M_2$ second devices.

12. The method according to claim 10 or 11, wherein sending, by the $M_1$ second devices in the M second devices related to the first service, the first data or the first inference value to the first device comprises:

sending, by each of the $M_1$ second devices, the first data to the first device; or
sending, by each of the $M_1$ second devices, the first inference value to the first device; or
sending, by each of $M_3$ second devices in the $M_1$ second devices, the first data to the first device, and sending, by each of $M_4$ second devices in the $M_1$ second devices, the first inference value to the first device, wherein $M_3$ is a positive integer less than $M_1$, and the $M_4$ second devices are $M_1$-$M_3$ second devices other than the $M_3$ second devices in the $M_1$ second devices.

13. The method according to claim 12, wherein before sending, by each of the $M_1$ second devices, the first inference value to the first device, the method further comprises:

sending, by the first device, a corresponding first model to each of the $M_1$ second devices.

14. The method according to claim 12, wherein before sending, by each of the $M_4$ second devices in the $M_1$ second devices, the first data to the first device, the method further comprises:

sending, by the first device, a corresponding first model to each of the $M_4$ second devices.

15. The method according to any one of claims 10 to 14, wherein the method further comprises:

sending, by each of the $M_1$ second devices, a parameter type of the first data to the first device; and

determining, by the first device based on the parameter type of the first data of each of the $M_1$ second devices, the first model corresponding to each of the $M_1$ second devices.

16. The method according to any one of claims 10 to 14, wherein the method further comprises:

sending, by each of the $M_1$ second devices, a parameter type of the first data to the first device;
sending, by the first device, the parameter type of the first data of each of the $M_1$ second devices to a third device;
determining, by the third device based on the parameter type of the first data of each of the $M_1$ second devices, the first model corresponding to each of the $M_1$ second devices; and
sending, by the third device to the first device, the first model corresponding to each of the $M_1$ second devices.

17. A communication system, wherein the communication system comprises a first device and M second devices, wherein

the first device is configured to perform the method according to any one of claims 1 to 7; and
each of the M second devices is configured to perform the method according to claim 8 or 9.

18. A communication apparatus, wherein the apparatus comprises:

a processing unit, configured to obtain a first inference value of each of $M_1$ second devices in M second devices related to a first service;
a communication unit, configured to receive a second inference value from each of $M_2$ second devices in the M second devices, wherein M is a positive integer, and both $M_1$ and $M_2$ are positive integers less than or equal to M, wherein
the first inference value is generated on the communication apparatus or the second device corresponding to the first inference value by using first data and a first model, the second device corresponding to each of the first inference value, the first data, and the first model is a same second device in the $M_1$ second devices, and the first model is determined by the communication apparatus;
the second inference value is generated on the second device corresponding to the second inference value by using second data and a second model, and the second device corresponding to each of the second inference value, the second data, and the second model is a same second device in the $M_2$ second devices; and
the processing unit is further configured to determine a comprehensive inference value of the first service based on the first inference value of each of the $M_1$ second devices and the second inference value of each of the $M_2$ second devices.

19. A communication apparatus, wherein the apparatus comprises:

a communication unit, configured to send first data to a first device; or configured to receive a first model from a first device, and send a first inference value to the first device, wherein
the first data is data that is related to a first service and that can be sent to the first device, and the first inference value is generated on the communication apparatus by using the first data and the first model; and
the communication unit is further configured to send a second inference value to the first device, wherein the second inference value is generated on the communication apparatus by using second data and a second model, and the second data is data that is related to the first service and that is not allowed to be sent to the first device.

20. A communication apparatus, comprising a memory and a processor, wherein

the memory is configured to store a computer program or instructions; and
the processor is configured to execute the computer program or the instructions stored in the memory, so that the communication apparatus performs the method according to any one of claims 1 to 7, or performs the method according to claim 8 or 9.

21. A computer-readable storage medium, wherein the computer-readable storage medium stores a computer program, and when the computer program is run, the method according to any one of claims 1 to 7 is implemented, or the method according to claim 8 or 9 is implemented.

22. A computer program product, wherein the computer program product comprises computer program code, and when the computer program code is run, the method according to any one of claims 1 to 7 is implemented, or the method according to claim 8 or 9 is implemented.

| Network exposure function NEF | Network repository function NRF | Network data analytics function NWDAF | Application function AF | Policy control function PCF | Unified data repository UDR |
|---|---|---|---|---|---|

Nnef  Nnrf  Nnwdaf  Naf  Npcf  Nudr

Nudm  Namf  Nsmf  Nbsf

| Unified data management UDM | Network management OAM | Access and mobility management function AMF | Session management function SMF | Binding support function BSF |
|---|---|---|---|---|

N4

N2

| Terminal device | Radio access network RAN | User plane function UPF | Data network DN |
|---|---|---|---|

N3  N6

FIG. 1

| First device | | Second device |
|:---:|:---:|:---:|
| | ← | |
| | → | |

FIG. 2

| NF network element #1 | NWDAF network element | NEF network element | AF network element | NF network element #2 |
|---|---|---|---|---|

Analytics request or analytics subscription (Analytics ID = Service experience) →

Event exposure subscription (Event ID = Service experience information) →

← Event exposure notification

Event exposure subscription (Event ID = Service experience information) ⇢

Event exposure subscription (Event ID = Service experience information) ⇢

← Event exposure notification

← Event exposure notification

Event exposure subscription (Event ID = Service experience information) →

← Event exposure notification

Analytics response or analytics notification ←

NF: network function
NWDAF: network data analytics function
NEF: network exposure function
AF: application function
ID: identity

FIG. 3

FIG. 4

NWDAF: network data analytics function
CN: core network
AF: application function

FIG. 5

① Send a public key
② Exchange an intermediate result
③ Calculate a gradient and a loss
④ Model update

Federal center C

Participant B

Participant A

Federated model

Model B

Model A

Encrypted model training

Encrypted feature alignment

No data exchange

Participant A

Participant B

FIG. 6

```
┌─────────────────┐                              ┌─────────────────┐
│ Second device   │                              │  First device   │
└─────────────────┘                              └─────────────────┘
         │                                                 │
         │  S101: M₁ second devices in M second devices    │
         │  send first data or a first inference value     │
         │  to the first device                            │
         │ ───────────────────────────────────────────────▶│
         │                                                 │
         │  S102: Each of M₂ second devices in the M       │
         │  second devices sends a second inference value  │
         │  to the first device                            │
         │ ───────────────────────────────────────────────▶│
         │                                                 │
```

S101: $M_1$ second devices in M second devices send first data or a first inference value to the first device

S102: Each of $M_2$ second devices in the M second devices sends a second inference value to the first device

S103: The first device determines a comprehensive inference value of a first service based on the first inference value of each of the $M_1$ second devices and the second inference value of each of the $M_2$ second devices

FIG. 7

| Terminal device | Base station | Core network CN device | Network data analytics function NWDAF network element | Application function AF network element |
|---|---|---|---|---|

| S201: The terminal device generates a second inference value #1 by using second data #1 and a second model #1 | S203: The base station generates a second inference value #2 by using second data #2 and a second model #2 | S205: The CN device generates a second inference value #3 by using second data #3 and a second model #3 | | S207: The AF network element generates a second inference value #4 by using second data #4 and a second model #4 |

S202: The terminal device sends first data #1 and the second inference value #1 to the NWDAF network element

S204: The base station sends first data #2 and the second inference value #2 to the NWDAF network element

S206: The CN device sends first data #3 and the second inference value #3 to the NWDAF network element

S208: The AF network element sends first data #4 and the second inference value #4 to the NWDAF network element

| TO FIG. 8B | TO FIG. 8B | TO FIG. 8B | TO FIG. 8B | TO FIG. 8B |

FIG. 8A

EP 4 648 448 A1

CONT.
FROM
FIG. 8A

CONT.
FROM
FIG. 8A

CONT.
FROM
FIG. 8A

CONT.
FROM
FIG. 8A

CONT.
FROM
FIG. 8A

S209: The NWDAF network element generates a first inference value #1 by using the first data #1 and a first model #1, generates a first inference value #2 by using the second data #2 and a first model #2, generates a first inference value #3 by using the first data #3 and a first model #3, and generates a first inference value #4 by using the first data #4 and a first model #4

S210: The NWDAF network element determines a comprehensive inference value based on the first inference value #1, the first inference value #2, the first inference value #3, the first inference value #4, the second inference value #1, the second inference value #2, the second inference value #3, and the second inference value #4

FIG. 8B

| Terminal device | Base station | Core network CN device | Network data analytics function NWDAF network element | Application function AF network element |
|---|---|---|---|---|

S301: The NWDAF network element sends a first model #1 to the terminal device

S302: The NWDAF network element sends a first model #2 to the base station

S303: The NWDAF network element sends a first model #3 to the CN device

S304: The NWDAF network element sends a first model #4 to the AF network element

| S305: The terminal device generates a first inference value #1 by using first data #1 and the first model #1, and generates a second inference value #1 by using second data #1 and a second model #1 | S307: The base station generates a first inference value #2 by using first data #2 and the first model #2, and generates a second inference value #2 by using second data #2 and a second model #2 | S309: The CN device generates a first inference value #3 by using first data #3 and the first model #3, and generates a second inference value #3 by using second data #3 and a second model #3 | | S311: The AF network element generates a first inference value #4 by using first data #4 and the first model #4, and generates a second inference value #4 by using second data #4 and a second model #4 |

TO FIG. 9B | TO FIG. 9B | TO FIG. 9B | TO FIG. 9B | TO FIG. 9B

FIG. 9A

CONT.
FROM
FIG. 9A

CONT.
FROM
FIG. 9A

CONT.
FROM
FIG. 9A

CONT.
FROM
FIG. 9A

CONT.
FROM
FIG. 9A

S306: The terminal device sends the first inference value #1 and
the second inference value #1 to the NWDAF network element

S308: The base station sends the first inference
value #2 and the second inference value #2 to
the NWDAF network element

S310: The CN device sends the
first inference value #3 and the
second inference value #3 to the
NWDAF network element

S312: The AF network
element sends the first
inference value #4 and the
second inference value #4 to
the NWDAF network element

S313: The NWDAF network element determines a
comprehensive inference value based on the first
inference value #1, the first inference value #2, the
first inference value #3, the first inference value
#4, the second inference value #1, the second
inference value #2, the second inference value #3,
and the second inference value #4

FIG. 9B

Communication apparatus 1000

Communication
unit                    1001

Processing unit          1002

Storage unit             1003

FIG. 10

Communication apparatus 1100

Processor        1101          Memory        1102

Instructions      1103         Instructions   1104

Transceiver      1105          Antenna        1106

FIG. 11

Chip 1200

Memory    1203    Processor    1201

Communication interface    1202

FIG. 12

## INTERNATIONAL SEARCH REPORT

| International application No. |
| --- |
| **PCT/CN2023/143494** |

**A. CLASSIFICATION OF SUBJECT MATTER**

H04W4/60(2018.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNKI, DWPI, CNTXT, ENTXTC, 3GPP: 网络数据分析, 纵向联邦学习, 垂直联合学习, 推断, 推理, 公共, 共享, 私有, 隐私, 模型, network data analytics function, NWDAF, Vertical Federated Learning, VFL, inference, common, shar+, model

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022116061 A1 (HUAWEI TECHNOLOGIES CO., LTD.) 09 June 2022 (2022-06-09) description, page 15, line 14-page 29, line 10 | 1-22 |
| A | WO 2022222152 A1 (GUANGDONG OPPO MOBILE COMMUNICATIONS CO., LTD.) 27 October 2022 (2022-10-27) entire document | 1-22 |
| A | WO 2022141279 A1 (HUAWEI TECHNOLOGIES CO., LTD.) 07 July 2022 (2022-07-07) entire document | 1-22 |
| A | ERICSSON et al. "Solution to UC and KI on how to determine the QoS profile" *SA WG2 Meeting #S2-129 S2-1810227*, 19 October 2018 (2018-10-19), entire document | 1-22 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 March 2024** | **29 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/143494**

| Patent document cited in search report | | | Publication date (day/month/year) | Patent family member(s) | | | Publication date (day/month/year) |
|---|---|---|---|---|---|---|---|
| WO | 2022116061 | A1 | 09 June 2022 | EP | 4243481 | A1 | 13 September 2023 |
| | | | | US | 2023308930 | A1 | 28 September 2023 |
| | | | | CN | 116114292 | A | 12 May 2023 |
| WO | 2022222152 | A1 | 27 October 2022 | EP | 4328815 | A1 | 28 February 2024 |
| | | | | CN | 117157651 | A | 01 December 2023 |
| WO | 2022141279 | A1 | 07 July 2022 | US | 2023353465 | A1 | 02 November 2023 |
| | | | | EP | 4262268 | A1 | 18 October 2023 |
| | | | | CN | 116097734 | A | 09 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310090941